(19) Europäisches Patentamt / European Patent Office / Office européen des brevets

(11) **EP 2 824 479 B1**

(12) **EUROPEAN PATENT SPECIFICATION**

(45) Date of publication and mention
of the grant of the patent:
**06.07.2016  Bulletin 2016/27**

(51) Int Cl.:
*G01S 19/02* (2010.01)     *G01S 3/74* (2006.01)

(21) Application number: **13176297.3**

(22) Date of filing: **12.07.2013**

(54) **Method and system for locating a moving vehicle**

Verfahren und System zum Orten eines sich bewegenden Fahrzeugs

Procédé et système de localisation d'un véhicule en déplacement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.01.2015  Bulletin 2015/03**

(73) Proprietor: **Ingenieria de Sistemas Para
La Defensa de Espana, S.A.
28040 Madrid (ES)**

(72) Inventors:
• **ANTON SANCHEZ, Alberto**
  **28040 Madrid (ES)**
• **GARCIA-ROJO LOPEZ, Isabel**
  **28040 MADRID (ES)**
• **GIRON VARA, Alejandro**
  **28040 MADRID (ES)**
• **TORRE FERNANDEZ, Alberto**
  **28040 Madrid (ES)**

(74) Representative: **Carvajal y Urquijo, Isabel et al
Clarke, Modet & Co.
Suero de Quiñones, 34-36
28002 Madrid (ES)**

(56) References cited:
**JP-A- 2012 044 596     US-A- 6 104 345
US-B1- 6 697 633**

• **SHIANN SHIUN JENG ET AL: "Estimation and
Cancellation of Doppler Shift for an OFDM Smart
Antenna System", I E E E V T S VEHICULAR
TECHNOLOGY CONFERENCE. PROCEEDINGS,
IEEE, US, 1 April 2007 (2007-04-01), pages
579-583, XP031092696, ISBN: 978-1-4244-0266-3**

**Description**

FIELD OF THE INVENTION

This invention betongs to the fields of wireless communications, digital signal processing, statistical analysis, array processing, ground station engineering and air and space technology. In particular, it can be applied to the DoA (Direction of Arrival) calculation and tracking of satellites, deep-space probes, launchers, UAV and missiles, taking advantage of their telemetry or similar downlink signals.

BACKGROUND OF THE INVENTION

Wireless communications benefit from all the more directive antennae in the ground segment since this translates into increased radiation gain and thus additional link budget margin. However, this improvement collides with the fact that the DoA of the desired signal is not always known with the required precision. Indeed, more directive antennae imply narrower beamwidth and, thus, if a signal is to be received or transmitted with the desired gain, fine pointing of the ground segment antenna is mandatory. The complexity of this requirement is exacerbated when dealing with signals sent by or to moving vehicles.

In some cases, the DoA can be predicted with suitable precision and accuracy through the use of complex mathematical models of the vehicle trajectory. For example, in satellites applications, orbital propagators such as SGP4/SDP4 (Simplified General Perturbations version 4 / Simplified Deep-Space perturbations version 4) are commonly used for calculating the positions of said satellites. These positions are then set in the initial pointing of dish antennae as an aid for fast acquisition.

However, those techniques are generally designed for stable or final orbits, with decreasing precision in some critical scenarios where too much inherent uncertainty makes the estimation system less reliable. Thus the initial estimate of the vehicle's DoA must be improved with additional means. Such scenarios include the LEOP (Launch and Early Phase) of satellites, critical manoeuvres, malfunctioning or anomalies in the nominal orbit and, of course, any complex trajectory which cannot be fitted into the mentioned mathematical models, which can be the case of missiles.

Bearing in mind the preceding dichotomy, it would seem appropriate to have a MA (Main Antenna) with maximum antenna area, and thus, gain, used for the reception and transmission of the desired signals, and an independent system used for the prior localisation and tracking of the desired air and/or spaceborne vehicle. This auxiliary system would send to the main one the required steering information for proper reception of the desired signal.

For example, a single smaller-sized auxiliary antenna can be included, thus retaining the high gain of the main antenna, and allowing an increased angular search window with the smaller one. This auxiliary system can be completely independent, with a single interface with the main antenna to send the estimated DoA. On the other hand, the auxiliary antenna can be attached to the rim of the main one in order to share the steering and coordinate systems. Monopulse tracking, among others, can then be performed. A single system could also be considered, if combined with improved mechanical search algorithms such as conical scans or step track, among others.

The preceding solutions, though, have a number of impairments. Indeed, mechanical scans usually have long acquisition times, which can be critical in some communications scenarios, especially in the initial phases of acquisition. As the angular uncertainty window during this phase is wide it can take a long time before the antenna acquires the desired signal, causing data losses and obviously inability to operate the air or spaceborne vehicle.

Other impairments include white noise vulnerability (for the auxiliary small-sized antenna); mechanical impact on main antenna (for the auxiliary non-independent antenna) or absence of interferer discrimination capabilities. A fast and robust system for the localisation and tracking of air and spaceborne vehicles in scenarios with great angular uncertainty and highly dynamical characteristics is thus needed.

US 6 697 633 discloses a method of direction finding based on the cumulant recovery (CURE) algorithm, which uses correction for Doppler shift of the signal components.

JP 2012 044596 discloses a tracking antenna apparatus comprising a phase array antenna for estimating the direction of arrival of the satellite signals using subspace methods, such as MUSIC.

**Bibliographic references**

[1] H. L. Van Trees. Optimum Array Processing. Part IV of Detection, Estimation and Modulation Theory. Wiley, 2002.
[2] L. C. Godara. Smart Antennas. CRC Press, 2004.
[3] R. O. Schmidt. "Multiple emitter location and signal parameter estimation". IEEE Trans. Antenna Propag., vol. AP-34, pp. 276-280, March 1986.

[4] R. Roy. ESPRIT: Estimation of Signal Parameters via Rotational Invariance Techniques. Ph. D. Dissertation, Stanford University, 1987.

[5] B. Nadler. "Nonparametric Detection of Signals by Information Theoretic Criteria: Performance Analysis and an Improved Estimator". IEEE Trans. Signal Processing, vol. 58, no. 5, May 2010.

[6] A. J. Weiss, B. Friedlander. "Algorithm for Steering Vector Estimation Using Second Order Moments". Proceedings on IEEE, October 1995.

[7] D. A. Wheeler, P. R. Atkins. "Estimation of Source Bearings at a Randomly Deformed Array by Signal Space Transformations". IEEE, April 1991.

[8] P. J. Chung, and S. Wan. "Array Self-Calibration Using SAGE Algorithm". IEEE 5th, July 2008.

[9] A. Manikas, and N. Fistas. "Modelling and Estimation of Mutual Coupling between Array Elements". IEEE, 1994.

## SUMMARY OF THE INVENTION

The present invention is an array-based system and method for localisation and tracking of air and/or spaceborne vehicles, with the following characteristics:

- White noise robustness, accomplished through dual super-resolution space and frequency filters.
- Fast localisation using array electronic scan capabilities.
- Tracking and prediction features, along with interferer discrimination, using trajectory filters.

Special emphasis is laid on the calibration system for proper performance.

The method and system according to the invention is defined in the claims. The present invention is composed of the following subsystems:

- The first one is a plurality of auxiliary antennae with a given radiation pattern. These will receive the desired signal, which can be of an electromagnetic, acoustic or otherwise nature. The minimum number of auxiliary antennae is two. The maximum number will be determined mainly by cost considerations. The geometrical layout of the elements can be arbitrary, although some aspects will affect the final performance. Finally, the auxiliary antennae need not be identical.
- Behind each antenna will be placed an RC (Receiving Chain), the main task of which is to adapt the received signal to the requirements of the digital processor, to be considered next. Typically, although not mandatory, these chains will include filtering stages, amplifiers and down-converters.
- The next subsystem is the MDP (Multichannel Digital Processor), which interfaces with the RC via ADC (Analogue to Digital Converters) components. Here more conditioning of the received signals in each RC will be performed, in the digital realm. Additionally, statistical signal analysis will be carried out to obtain the desired signal DoA. Finally, tracking filters will also be included.
- The F&T (Frequency & Time) subsystem is charged with providing a frequency reference for the down-converters, if used, a clock and trigger reference for precise synchronisation of the ADC, and an absolute time reference.
- The CDGC (Calibration Data Generator and Collector) includes all calibration information which is used by the MDP for DoA estimation, along with the methods and algorithms needed to obtain said information.
- The MCIM (Monitoring, Control and Interface Manager) supervises the operation of the previous subsystems, interfaces with the MA system, and shows the GUI (Graphical User Interface).

## BRIEF DESCRIPTION OF THE DRAWINGS

Embodiments will be described with reference to the following drawing figures, in which like numerals represent like items throughout the figures, and in which:

- FIG. 1 is a schematic of an embodiment of the whole system, along with its external interfaces.
- FIG. 2 is an exemplary block diagram of the RC subsystem, configured according to an embodiment of the present invention.
- FIG. 3 is a block diagram of the MDP subsystem.
- FIG. 4 is a block diagram of the Statistical Processor module, which is part of the MDP subsystem in FIG. 3.
- FIG. 5 is a block diagram of the Signal Tracker and Discriminator, which is part of the MDP subsystem in FIG. 3.
- FIG. 6 is a block diagram of the F&T subsystem.
- FIG. 7 is a block diagram of the CDGC subsystem.
- FIG. 8 is a block diagram of the MCIM subsystem.
- FIG. 9 is a block diagram of the External Data Processor and Distributor module, which is part of the MCIM subsystem in FIG. 8.

- FIG. 10 is an exemplary block diagram of the Auxiliary Antenna subsystem, configured according to an embodiment of the present invention.
- FIG. 11 is a flowchart of steps in an exemplary method for operating the system according to an embodiment of the present invention.
- FIG. 12 is a schematic view of a computer and digital processing system within which a set of instructions operate according to an embodiment of the present invention.
- FIG. 13 is a representation of an application of the system for simultaneous acquisition of more than one desired signal with differing frequencies.
- FIG. 14 is an exemplary flowchart of a full calibration of the system in successive stages.
- FIG. 15 shows an exemplary configuration of the Geometrical Calibration process.
- FIG. 16 shows an exemplary configuration of the whole DoA estimation process.

DETAILED DESCRIPTION

The present invention is described with reference to an exemplary embodiment according to the attached figures and the numerals in them.

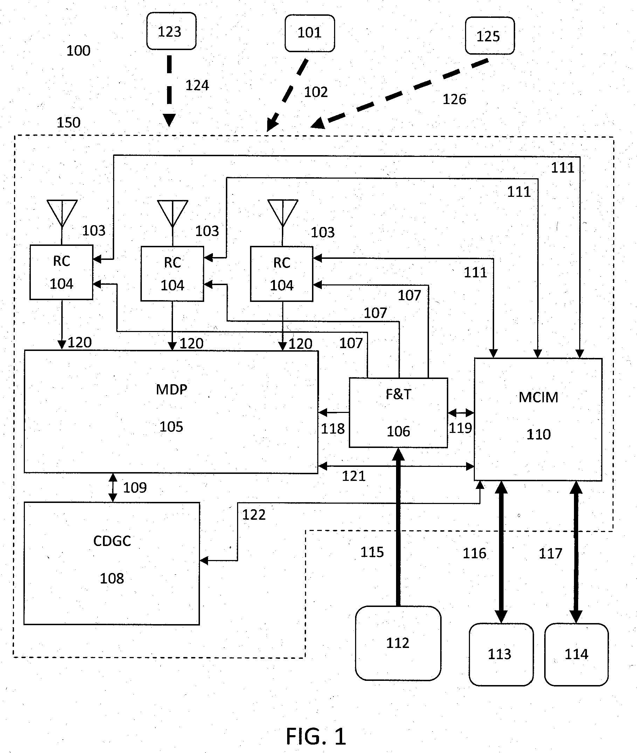

The ALTS **150** (Auxiliary Locating and Tracking System), as shown in FIG. 1, is used for the localisation and tracking of an air or spaceborne vehicle, the DoA of which is known with insufficient precision and accuracy. The ALTS **150** is conceived as an auxiliary system to an external MA, not shown in the figure, which needs to communicate with the air or spaceborne vehicle. In order to do so, though, the MA requires an improved DoA estimate, with increased levels of precision and accuracy. This improved DoA will be provided by the ALTS **150**.

FIG. 1 shows an exemplary scenario where the proposed ALTS **150** can be applied. In the scenario we have an air or spaceborne vehicle **101,** which can be motionless or not. Of course, the ALTS **150** is especially suited for moving targets.

The vehicle **101** emits a desired signal **102** with a given DoA and a given frequency, which can change over time. The DoA can be expressed in various forms, depending mainly on the geometrical layout of the auxiliary array antennae **103**. Indeed, for linear arrays, a single angle is enough to define said DoA. For planar or three dimensional arrays, two angles are required. These can be specified as relative to an array coordinate system: for example, in spherical coordinates; or in an absolute way: for example, in azimuth and elevation. In any case the DoA will be the spatial direction which will define the wavefront's translation direction of the desired signal **102,** with respect to a given coordinate system known by the ALTS **150**. This DoA, imperfectly known by the MA, needs to be estimated by the ALTS **150** in order to guarantee proper reception of the desired signal from the vehicle **101** by the MA. The imperfect knowledge of the DoA can be characterised by an angular uncertainty window around the a priori estimation. This window can be one or two-dimensional, depending on the DoA definition. Its shape will also depend on the given level of uncertainty dispersion of the DoA that the ALTS **150** needs to deal with.

More than one desired signal **102** can be acquired simultaneously, provided the number of desired signals plus one in a frequency bin is less or equal to the number of auxiliary antennae **103,** and no interferer is present. For the interferer case, the updated restriction will be given below. The definition of frequency bins will be provided in the analysis of the Frequency Estimator **402**. Also, all the following conditions must be met:

- A significant percentage of the signals' power must be within the bandwidth of the most restrictive filter in the ALTS **150**. The exact amount will depend on the operating characteristics of the scenario. This condition is not mandatory if simultaneity is interpreted in a "non-restrictive" way. Indeed, signals with highly differing central frequencies can be localised by defining different frequency windows in the F&T subsystem **106.** This will be analysed in more detail afterwards.
- The signals must be within the angular FoV (Field of View) of the auxiliary antennae **103**. The effective FoV will depend on the operating characteristics of the scenario.
- Either the DoA or the frequencies of the signals must differ in a significant way, as explained below for the interferer case.

Also, in order to be able to identify the signals, a priori knowledge of the trajectories of the involved vehicles **101** is required.

Besides the desired signal **102** from the vehicle **101,** the scenario can also include a motionless or not interferer **125,** which emits an interfering signal **126**. The interferer can be natural or man-made, including jammers and partially correlated interferences. The ALTS **150** is able to discriminate it, as will be shown below, provided one of the following conditions is met:

- The interferering signal **126** is not within the bandwidth of the desired signal **102**and does not exceed a given power offset limit depending on the filtering capabilities of the RC **104** and the digital filters in the MDP **105.**
- The interferering signal **126** has a different DoA than that of the desired signal **102,** and is beyond the angular uncertainty window.
- The interferering signal **126** has a different DoA than that of the desired signal **102,** and the difference between them is greater than the spatial resolution of the DoA estimation algorithm. The interferering signal **126** can be in the angular uncertainty window, provided its trajectory is different from that of the desired signal **102** in a significant way, either in direction and/or speed. The required difference will depend on the operating characteristics of the scenario.

- Both interferering **126** and desired signal **102** have carrier modulations, the frequency difference of both carriers is greater than the frequency resolution of the frequency estimation algorithm, and the trajectories of both vehicles are different in a significant way.
- The interferering signal **126** is not present during all the acquisition time of the digital signal samples.

The preceding considerations do not apply in case the interferer's power saturates the ADC **301.** Also, the power of fully correlated interferers, such as is the case in multipath scenarios, needs to be below the desired signal's, in a given amount, determined by the characteristics of the ALTS **150.** More than one interferer can be present, provided the number of interferers plus the number of desired signals plus one in a frequency bin is equal or less than the number of auxiliary antennae **103.** Finally, the interferer, like the desired signal, is implied to have a point-like, even if potentially time-varying, DoA. Spatially distributed interferers can be considered, although a single one will be modelled as several point-like equivalents, and the preceding restriction in the final number of point-like interferers must still be met.

FIG. 1 also includes a test signal **124** used for calibration purposes, as explained afterwards. The test signal's source **123** can be either one or several air or space-borne vehicles with known or imperfectly known DoA, or one or several calibration towers or probes or similar test antennae remotely located with respect to the ALTS **150.** Celestial bodies such as the Sun or the Moon can also be considered.

In FIG. 1 the constituents of the ALTS **150** are also presented. Firstly we have the antennae **103.** In the figure three are shown for clarity reasons, although, as already mentioned, a differing number can be considered, provided it is greater or equal to 2. Also, although the antennae are identical in the figure, this is not a restriction in the system. Indeed, antennae with differing properties can be considered.

Behind the antennae come the RC **104,** which interface with the MDP **105.** In said interface **120** some important restrictions must be met for proper operation. Mainly SNR (Signal-to-Noise Ratio) must be above a given threshold, received power must not saturate the ADC **301,** and be above a given SQR (Signal-to-Quantisation Noise Ratio).

It is important to point out that numerals such as **120,** in this and the following figures, may refer at the same time to interfaces between subsystems or components, and the circulating information therein.

The F&T subsystem **106** provides an LO (Local Oscillator) signal **107** for the RC **104,** provided a Down-Converter **205** is present; and several timing references **118** for the MDP subsystem **105.** An external absolute time reference **115** is obtained from a suitable Time Generator **112. This** Time Generator can be part of the MA, or not. For example, a time reference can be obtained from GPS satellites. Main restriction here is that the accuracy and precision levels must guarantee proper time synchronisation. An internal Time Generator could also be considered.

The CDGC **108** collects and generates the calibration information **109** given and used by the MDP **105.** For clarity reasons, the interface **707** used by the CDGC to inject the Test Signal from the Test Signal Generator **706** to the couplers **202** in the RC **104** has not been included.

Finally, the MCIM subsystem **110** monitors and controls the remaining ones through the interfaces **111, 119, 121** and **122.** An additional interface, **1003,** not included in the figure for clarity reasons, can also be considered. The MCIM communicates with the End User **113** and miscellaneous external data sources **113** through the interface **116,** and with the MAI (Main Antenna Interface) **114** through the link **117.**

Although not shown in the figure, proper power supply must be provided for all subsystems. The ALTS **150,** thus, can include power sources for transformation of external AC (Alternating Current) power supply into DC (Direct Current), if needed.

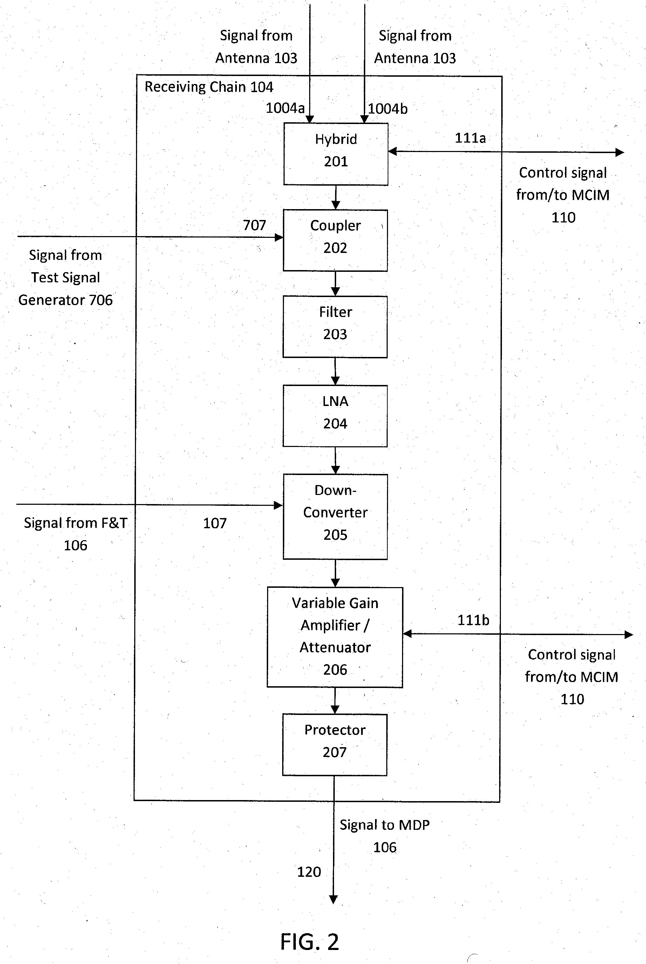

FIG. 2 shows an exemplary block diagram of the RC **104,** especially suited for electromagnetic signals. The exact structure can be more general, since the main functionality of the RC **104** is to adapt the analogue signal as received by the antennae **103** to the requirements imposed by the MDP **105.**

Even in the context of the exemplary realisation of the RC **104,** several modifications are allowed. Namely, not all the blocks are mandatory, neither is their ordering unique. Also, some of them can be replicated in various stages. Some of these modifications will be pointed out below, due to their relevance.

As shown, two signal inputs **1004a** and **1004b,** are defined, one for each orthogonal polarisation, for the general case of a dually-polarised antenna. Considered polarisations can be elliptical, circular or linear. Of course, single-polarised antennae can also be used. In this case, a single interface **1004,** will be present.

The hybrid **201** selects a given polarisation, as defined in the MCIM subsystem **110.** It can be selected by the user. The hybrid could be eliminated and a fully dual polarised system implemented, with a polarimetric digital processing. The main disadvantage of this is the doubling of the number of RC **104.**

The coupler **202** allows the Test Signal from the Test Signal Generator **706** to run through the RC **104.** As will be shown, this can be used to calibrate the phase and amplitude response of the different RC **104.** In order to include the hybrid **201** response, the coupler should be placed before. Once more, the main disadvantage is the doubling of components. Test Signal Injection, on the other hand, is not mandatory to obtain an operational system.

A filter **203** is included below to eliminate out-of-band signals and thus reduce the possibilities of saturation of the first amplifiers. This is especially useful if the ALTS **150** operates when the MA is in transmission mode. This can be obviated, though, if the NF (Noise Figure) performance is a priority.

The LNA (Low Noise Amplifier) **204**'s aim is to control the NF as soon as possible.

The Down-Converter **205** transforms the received signal central frequency to IF (Intermediate Frequency) or smaller RF (Radio Frequency), which is more suited for narrow filtering and digital processing. In order to do so, it uses an LO signal **107** generated in the F&T subsystem **106.** This stage can also include filtering before the conversion, to improve the image band rejection and eliminate as much noise generated by the prior amplifiers as possible; filtering after the conversion, where more selective filters can be implemented; and various amplification stages. Filtering bandwidth will usually be higher prior to the down-conversion, to be able to acquire a greater variety of signals, than afterwards, where noise must be minimised and where the system can benefit from a selectable LO signal **107.**

The analogue Down-Converter **205** is not mandatory. Indeed, down-conversion can be performed in the ADC **301,** bearing in mind band-pass sampling theory. Also, other formats can be implemented, such as single or double down-conversions, or even up-conversions.

A VGA (Variable Gain Amplifier) **206** has been included. Although not mandatory, it is useful to increase the dynamic range of the system beyond that of the ADC **301.** The gain or attenuation **111 b** is specified by the user and sent to the VGA **206** through the MCIM **110.** A VGA stage can also be included in the ADC **301.** Instead of an amplifier, a programmable attenuator can also be considered. Additionally, an AGC (Automatic Gain Control) system could be implemented, taking into account the power of the digital samples in the MDP **105.** The main problem with this is the potential appearance of non-linear behaviour, which must be carefully dealt with. Taking this into account, a VGA/attenuator with a gain/attenuation set in function of some link budget parameter, such as the vehicle trajectory parameters (mainly the range distance) can be a simpler solution.

The last block in FIG. 2 is a protector **207,** the main task of which is to protect the equipment behind it from high current surges. A number of components can be considered in this block, such as but not limited to power limiters or lightning arrestors. In order to fully protect the RC **104,** this block can be placed before the hybrid or at least before the coupler, with suitable additional protection of the control line **111a.** The price to pay for its placing before the LNA is additional G/T (Gain over Temperature) loss in the system.

Although not shown in FIG. 2, it may be advisable to have a filtering stage prior to the ADC, so as to eliminate noise or spurious signals generated by prior amplifying stages. Also, filters after the down-conversion are required for anti-aliasing purposes.

In FIG.2 all blocks seem to be co-located. This is not mandatory, though. Indeed, it may be that some components are close to the auxiliary antenna **103,** in an outdoor scenario, while others are in an indoor operating centre, along with remaining subsystems. It is advisable that at least the LNA **204,** and prior components, are close to the antenna **103,** in order to reduce the NF of the RC **104.** Regarding the Down-Converters **205,** both options have advantages and drawbacks. A Down-Converter close to the antenna, or an LNB (Low Noise Block Converter), implies higher power supply, weight and size, but the potentially long downlink cables going to the sheltered equipment will have a lower operating frequency. Thus, low loss and smaller diameter characteristics for the cables can be more easily guaranteed. In any case, each Down-Converter must have an LO signal **107** generated from the same PLL (Phase Locked Loop) or similar frequency tone generation device. Indeed, independent PLL placed in each Down-Converter **205,** even if they are supplied with the same low frequency reference, will produce LO signals **107** with time-varying frequency offsets and phase noise which will be different in each RC **104,** thus invalidating prior calibration data. So, at least regarding the LO signal **107,** low frequency and thus low loss, small diameter cables, cannot be considered. If LO cables are too long, additional amplifying of the LO signal **107** may be required, and its spectral purity compromised.

Even with the preceding precautions, the path itself of the LO signal **107** to each Down-Converter **205** may be considered as a phase noise source that must be continuously corrected. Environmental effects such as vibration, acoustic and temperature effects cause slow variations (> 1 msec) of phase which will be more restrictive for higher LO frequency ranges. An alternative for high frequencies, thus, could be the introduction of LO optical distribution instead of RF cables.

In some scenarios, it may be advisable to reduce the number of cables going from the antennae **103** site to the sheltered one, if not co-located. As already commented, the hybrid **201** can be eliminated, along with the control line **111a.** A dual-circular polarisation system can still be considered if linearly polarised antennae **103** are used, assuming of course a 3 dB loss of polarisation mismatch. The LO signal **107** cable can be eliminated either by eliminating the Down-Converter **205,** by placing it in the sheltered operating area, or by re-using the downlink cables to send up the LO signal. In this case, a circulator or similar device should be placed in the subsystem close to the antenna **103.** Test cables **707** can be eliminated if this calibration method is not used. Finally, power supply cables, not shown in FIG. 2, can be eliminated sending the DC power supply through the downlink cables, and placing two bias tees per RC **104,** one prior to the Down-Converter **205,** and another one prior to the antennae **103** amplifying stages, namely, the LNA **204.**

It is important to notice that RC **104** components can be implemented with different technologies, as best suited. Indeed, for example, high frequency elements can be implemented using waveguide technology.

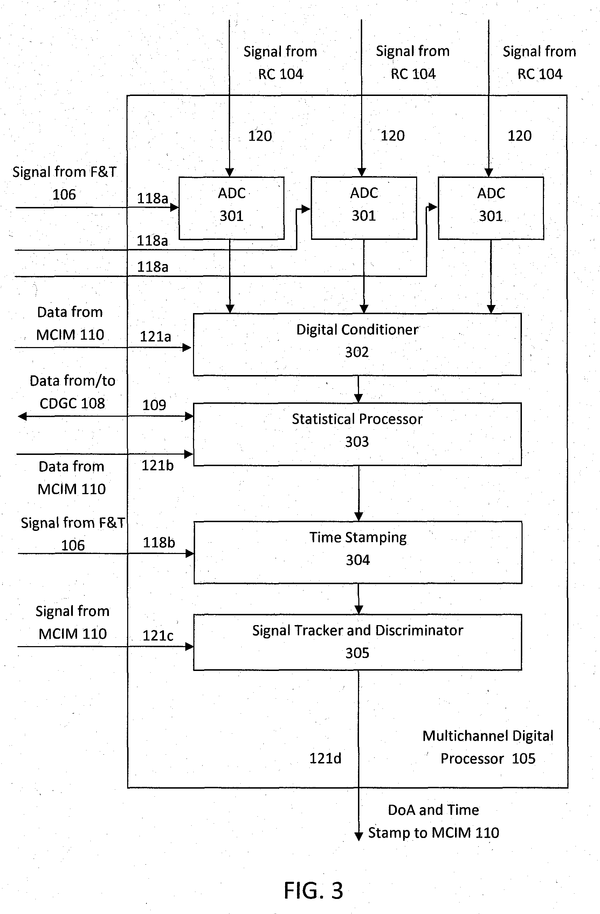

The MDP **105** is detailed in FIG. 3. The first block is the ADC **301.** There are as many ADC **301** as antennae **103.** All the ADC must be synchronised by the F&T subsystem **106.** They take two signals **118a** for this purpose, a trigger to start the acquisition at the same time, and a periodic clock to obtain successive samples in the same manner. The digitised signal can have a varying number of bits. More bits will increment the dynamic range of the ADC **301,** at the expense of higher computing and memory requirements, so that the main advantage of reducing the number of bits is that higher sampling rates can be achieved.

After these comes the Digital Conditioner **302** stage. This Digital Conditioner **302** can be implemented in a number of ways, or even eliminated. Some possible tasks for it are the following: digital filtering, baseband down-conversion and decimation. One of the main advantages of this block is that, if implemented in generic digital processing devices, such as DSP (Digital Signal Processor) or FPGA (Field Programmable Gate Array), flexibility in the whole system can be maintained while considering very specific conditioning of received signals. Indeed, RC **104** can be made more general, in terms of bandwidth for example, while a more specific, user-selected filtering is performed in the digital realm. Thus the configuration of this stage can be specified in the MCIM subsystem **110.** The parameters sent in control line **121 a** can be specified in a number of ways. For example, for an FPGA, several *.bit files with different Digital Conditioners **302** could be available to the End User **113.** Alternative programming ways, such as the use of dedicated software (LabVIEW, System Generator, etc.) or VHDL coding can also be considered.

Once the signal has been properly conditioned, the statistical processing **303** is carried out. The output of this processing will be either calibration information, or the DoA of the desired signal. It is a statistical processor because it estimates this information based on the statistics of the received digital signal samples.

As mentioned, the Statistical Processor **303** has two kinds of outputs and thus can operate in two modes. In normal acquisition mode, the digital signal samples are processed in order to obtain an improved DoA estimation of the desired signal. In calibration mode, the pertinent statistics of the signal samples are sent to the CDGC **108** to obtain a parametric calibration model of the array, or update the existing one. This information is used in acquisition mode for proper estimation. Calibration will be considered in more detail afterwards.

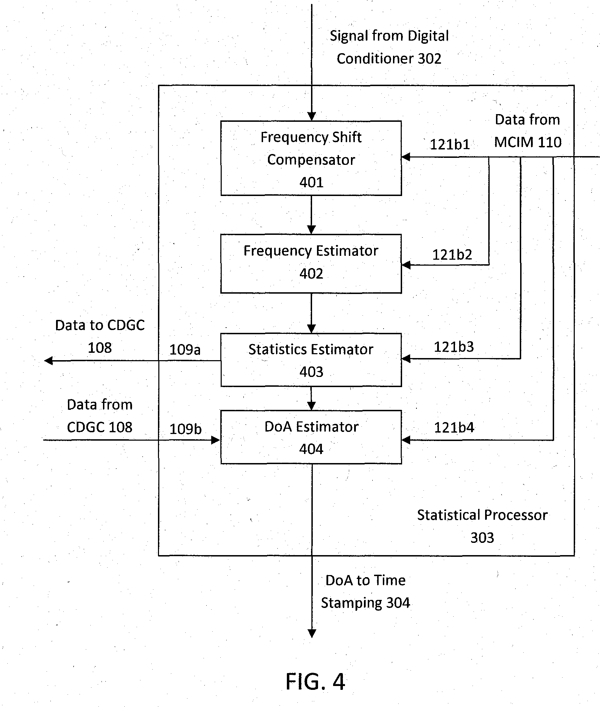

FIG. 4 shows a more detailed structure of the Statistical Processor **303.** The first block is the Frequency Shift Compensator **401.** The idea is that, if frequency estimation is to be performed, as will be described below, it is advisable to minimise the drift in the central frequency of the desired signal **102** during the signal samples' acquisition time. Main causes of this drift are variations in the PLL of the vehicle **101** which we wish to locate, and the Doppler shift of moving targets. The first one cannot be known in advance, but the second one can be estimated, even if roughly, provided some information of the vehicle **101** trajectory is available. The estimated Frequency Rate **121b1** is obtained from the MCIM **110.** The signal samples must be transformed in the following way:

$$x_n[kT] = x_n[kT] * exp\{-j\pi\dot{f}_{est} \times (kT)^2\}$$

Where $x$ are the digital signal samples, a complex N x K sized matrix, where N is the number of antennae **103,** and K the number of samples to be processed, which is defined by the End User **113.** $x_n[kT]$ is the signal sample of the nth-array branch, taken at sampling time $kT$, where T is the sampling period, which is taken as uniform, although a non-uniform case can easily be inferred. Finally $f_{est}$ is the estimated frequency shift rate **121 b1.**

More complex compensations can be considered, where $f_{est}$ is not a value but an equation, typically a polynomial model. In general, though, the acquisition times will be small enough for the linear model to be a valid approximation.

This processing also improves the interferer discrimination capabilities, as interfering signals with different frequency shift rates will be sprawled in a wider bandwidth, and their power contribution in a given frequency bin reduced. A frequency bin is a frequency window given by the frequency processing algorithms' resolution, in **402.** In any case, this processing is not mandatory and, if not present, the frequency bin is the whole signal bandwidth, as defined by the most restrictive filter in the ALTS **150.**

After this comes the Frequency Estimator **402.** This stage is useful when the desired signal has a non-uniform power distribution in the considered bandwidth. Indeed, for the DoA estimation algorithms, it is optimum to process only those frequency bins where the desired signal's power is the highest. A typical application is the processing of the carrier of a signal, discarding the modulated part.

The frequency estimation can be carried out in different ways. The simplest one is to perform an FFT (Fast Fourier Transform) of the input signal samples, take its absolute value, and locate the peaks where maximum power is present through a direct search algorithm. The main drawback here is that, for very noisy scenarios, the power peaks can be below the noise level of the FFT estimator, and thus impossible to detect. In this case, the use of more robust estimators are advised, namely, those based in Pisarenko method, such as frequency MUSIC (MUltiple SIgnal Classification). In any case, any frequency estimation algorithm can be applied here, provided it is robust enough for the required noise level. Also, windowing techniques can be combined with the FFT transform.

In general, the required information **121b2** from the MCIM **110** will be the frequency range where the estimation will be performed, and the resolution. Range will be determined by the uncertainty in the a priori frequency knowledge of the signal, and limited by the narrowest filter, typically in the digital realm. Resolution on the other hand, will be determined by the amount of noise and limited by the number of processed signal samples and the residual frequency shift of the signal. This justifies the use of a Frequency Shift Compensator **401.** In some cases, a simple spectral search will be enough, whereas in others a more complex algorithm, such as frequency MUSIC, will be mandatory. The main drawback of this last option is the high computing requirements, which will be considered afterwards.

More than one frequency can be estimated, thus taking into account the presence of interfering signals with non-uniform power distribution. Each estimation will be treated in parallel, until the desired signal can be discriminated from interferers in the Signal Tracker and Discriminator block **305.** The maximum number of frequencies that can be processed is the number of frequency bins minus 1. A much lower number is advisable, though, due to computing requirements. Besides, the presence of a very high number of interferers is not foreseeable. In any case, the size of the frequency signal space must be estimated prior to the estimation of the frequencies themselves. For this, a number of algorithms are available, such as but not limited to the AIC (Akaike Information Criterion), or the MDL (Minimum Description Length). In very noisy scenario, a modified AIC algorithm is advisable.

The frequency estimations can be used to select the appropriate frequency bins, either from a Frequency Transformation of the signal or using a Filter Bank approach. These are then given to the Statistics Estimator **403.** This block estimates the spatial statistics of both the desired signal **102** and the interfering one **126,** whence the DoA information can be extracted.

In the simplest form, the estimator computes the spatial correlation matrix of the signal, using a sample average. This is a second-order Statistics Estimator. A number of improvements can be considered, mainly depending on the geometrical layout of the auxiliary antennae **103,** which are based on structured approaches of the array correlation matrix. Some of these are the Forward-Backward Averaging or the Toeplitz Approximation.

Other methods can be considered, such as HOS (Higher Order Statistics) methods. Indeed, the use of cumulants, for example, can be implemented. Other aspects of the signal, such as cyclostationarity, can also be taken advantage of. Complex schemes such as neural networks are also possible. The main restriction of the block is that it has to transform digital samples into statistical information whence the DoA of the desired signal can be extracted afterwards.

The main required information here, at least for the second-order case, is the size of the sample average, i.e., the number of processed samples, K, included in control line **121b3.** This information is also used by the preceding blocks, through **121b1** and **121b2.**

This size will be limited by the non-stationary characteristic of the signal spatial statistics, mainly due to moving targets and thus changing DoA. For all faster air or spacecrafts, fewer samples will be used, and noise robustness will be reduced. This effect can be mitigated if the Digital Conditioner **302** includes a phase rotator in each branch, which partially compensates the signal angular movement. For this to be implemented, prior knowledge of the target's trajectory, namely its angular speed, must be available in **121a.**

In a calibration operating mode, the obtained information **109a** is given to the CDGC **108** for array calibration. In signal location and tracking mode, it is given to the DoA Estimator **404.**

Once more a number of algorithms can be used in this block. For improved performance it is best to use algorithms with super-resolution capabilities, such as MUSIC applied in the spatial domain or ESPRIT (Estimation of Signal Parameters via Rotational Invariance Techniques). Other possibilities such as MLE (Maximum Likelihood Estimation) or WSF (Weighted Subspace Fitting) are also possible, provided they maintain this super-resolution ability.

In general they operate with a non-linear cost function which needs to be optimised. For this, any number of non-linear optimisation methods can be used. Besides, usually noise and signal subspace must be separated in the statistical information provided by **403.**

For second-order statistics, this can be performed through an eigendecomposition or an SVD (Singular Value Decomposition) of the spatial correlation matrix. If more than one signal is present, the obtained signal eigen-vectors must be rotated following Procrustes' problem. For partially correlated interferers, amplitude offsets between array branches must be calibrated and compensated.

Different Statistics Estimators **403** will require adapted DoA Estimators **404**. Main stages in **404,** anyhow, as commented, will be the separation of noise and signal subspaces, and the construction of a cost function to be optimised, either by maximisation or minimisation. The output will be the calculated DoA of all signals present in the spectrum. As in the frequency case, the number of signals must be previously estimated.

For proper operation, the DoA Estimator **404** needs calibration data **109b** from the CDGC **108.** As input data **121b4** from the MCIM **110,** there will be the uncertainty angular window, where the cost function will be considered, centred on the a priori DoA estimation, and the operating frequency of the signal **102** before any down- and/or up-conversion.

As mentioned, the process in **403** and the DoA Estimator **404** must be carried for as many frequency estimates as obtained in **402.** Another consideration is that if one of the received signals or interferers does not fit into a narrowband model, the DoA estimation must assume a broadband processing.

In FIG. 3, after the Statistical Processor **303** comes the Time Stamping **304.** The estimated DoA are associated with an absolute time reference **118b** given by the F&T subsystem **106.** This absolute time reference **118b** is also applied to the digital signal samples.

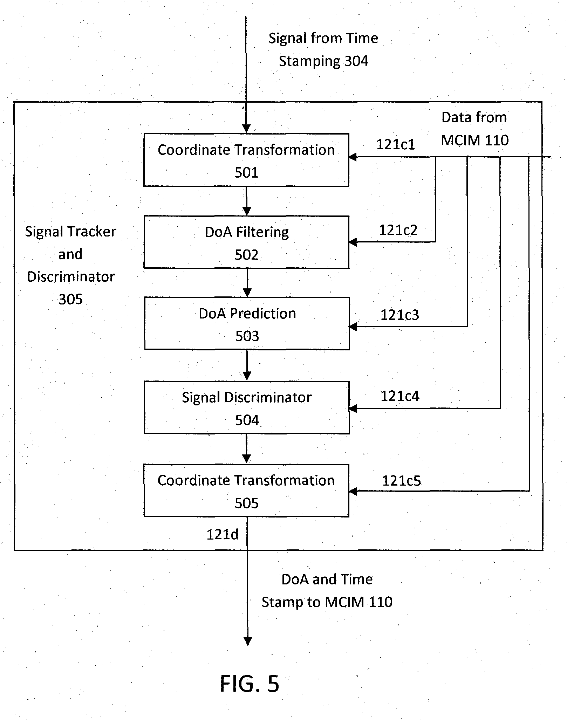

Last stage is the Signal Tracker and Discriminator **305,** which is detailed in FIG. 5. This block operates if iterative estimations are carried out over time in the Statistical Processor **303** i.e., if instead of a set of DoA for desired signal and interferers, there is a set of DoA vectors, where estimations are carried out in different times, properly referenced in the Time Stamping **304.**

This Signal Tracker and Discriminator **305** has three different purposes. Firstly it filters the DoA vectors in the DoA Filtering **502,** to smooth the resulting trajectories and eliminate the influence of outliers. Secondly, it carries out a prediction of the DoA in the DoA Prediction module **503,** bearing in mind the previously filtered DoA values. The prediction is useful so as not to be limited by the time lag between the DoA estimation and the update of the steering direction of the MA. Indeed, for high time lags and/or fast moving vehicles, when the steering is updated the improved value may no longer be valid. Thirdly, it discriminates from the set of DoA vectors in the Signal Discriminator module **504** which is the one corresponding to the desired signal **102.** Independent DoA vectors can be considered for different and non-overlapping frequency bins. However, for a given bin, if more than one DoA is obtained in the DoA Estimator **404,** all possible combinations of trajectories should be considered. For example, let's suppose that ten measurements are performed over time. In each one of these, two different frequency bins are detected as having a peak of signal power. In the first bin, only one DoA is obtained in the DoA Estimator **404,** whereas in the second one, four DoA are obtained. The total number of trajectories to be considered for discrimination is one (from the first bin) plus $4^{10}$ (from the second one). Of course, this may imply computing problems for a high number of measurements. In any case, the number of combinations can be greatly reduced if either the interfering signal **126** and the desired signal **102** have greatly differing power levels or if they are well separated in the angular uncertainty window and are not moving at very high speeds. In this case the number of possible combinations could be reduced to 5, one from the first frequency bin, and four from the second one. The limits of angular separation and vehicle speed differences will depend upon the operating characteristics of the scenario. In any case, all the obtained trajectories are compared with the a priori known one, and the one with minimum distance is chosen as pertaining to the desired signal. Distance here can be defined in a number of ways, for example, root mean square error between filtered DoA values and those known a priori.

Prior to these operations, a first Coordinate Transformation **501** can be performed. Indeed, a different coordinate system may be more suitable for filtering and prediction operations. Similarly, a Coordinate Transformation **505** can adapt the predicted value to the coordinate system used by the MAI **114.** One possible scenario, although not unique, is for the DoA Estimator **404** to operate in local spherical coordinates, the DoA Filtering **502** in inertial coordinates, the DoA Prediction **503** in azimuth/elevation, and the MAI **114** in elevation/cross-elevation offsets. All possible idiosyncrasies can be considered through the combination of first Coordinate Transformation **501** and second Coordinate Transformation **505.**

It is also worth noting that a typical implementation of DoA Filtering **502** and DoA Prediction **503** is a Kalman filter. Typically, non-linear approximations, such as EKF (Extended Kalman Filter) or UKF (Unscented Kalman Filter) will be required, depending on the coordinate transformations. Although alternative solutions are perfectly valid, even simpler ones such as Least Squares approximations or more complex ones such as Particle Filters.

Data from MCIM **110** includes MA longitude, latitude, altitude and steering **(121c1** and **121c5);** information about the satellite trajectory **(121c2, 121c3** and **121c4),** which can take the form of ephemerides, inertial coordinates, a priori DoA estimates or otherwise; and the prediction time offset **(121c4).**

As an output, the predicted desired signal DoA, and the associated time stamp **121d,** are given to the MCIM **110.** Of course, a simpler implementation can eliminate the Signal Tracker and Discriminator block **305.** The output DoA will be the calculated one, updated if possible with a priori knowledge of the vehicle **101** movement direction and speed. In this case, though, interferers will not be discriminated. In any case, the Coordinate Transformation **505** may be required.

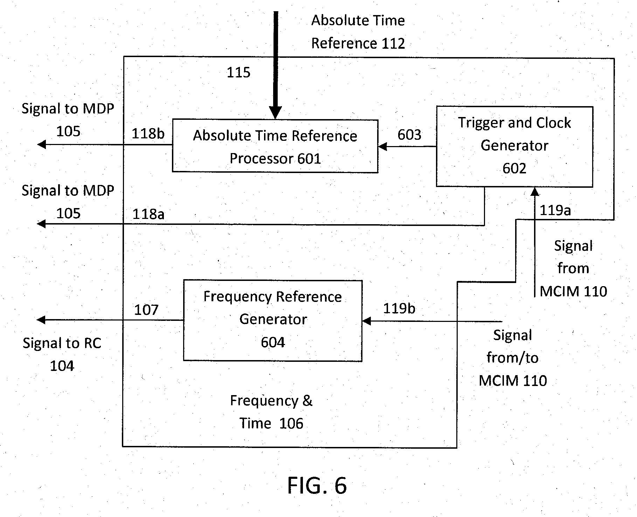

The F&T subsystem **106** is depicted in FIG. 6. The start of the acquisition or calibration of the ALTS **150** is signalled through **119a,** and will correspond to the pressing of a button by the End User **113** in the GUI **801,** or to a previously programmed event by said End User **113.** This sets the Trigger and Clock signals in the Generator **602,** which are sent to the ADC **301** through **118a.** The Trigger signal is also sent to the Absolute Time Reference Processor **601** through **603** to trigger the time reference acquisition. It is important that the cables **118a** and **603** are of very similar lengths and constitution, to guarantee almost identical propagation times of the Triggering Signals. The Absolute Time Reference Processor **601** takes a time reference **112,** adapts it to the format used by the MDP **105,** and sends it through **118b.**

On the other hand, the Frequency Reference Generator **604** generates the LO signal **107** for the RC **104.** As already commented, a single PLL must be used in order to maintain the frequency reference among all array RC **104.** The required frequency of the LO **119b** is obtained from the MCIM **110.**

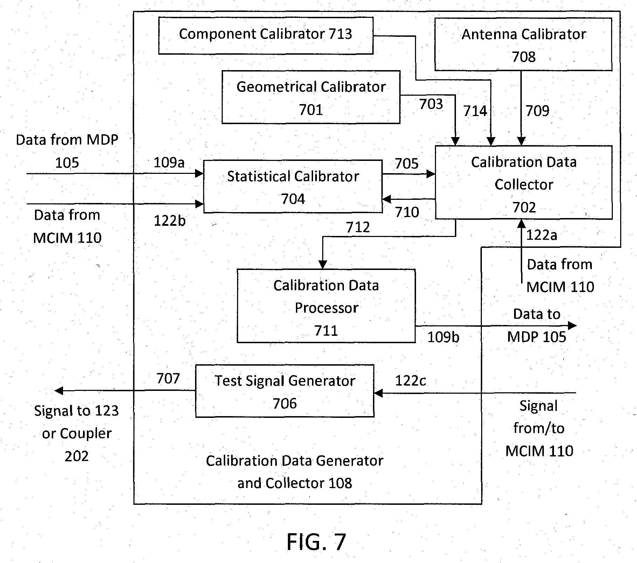

The CDGC **108** in FIG. 7 is divided into calibrating algorithms and the resulting calibration information. This last data is stored in the Calibration Data Collector **702,** which can adopt several forms, such as files in the processing computer, or a database, or otherwise. From this block the pertinent and updated information **712** will be extracted to be used by the MDP **105** through the link **109b.** Prior to this, though, the Calibration Data Processor **711** will combine and adapt the calibration information obtained from various sources.

From the MCIM **110** will come the information to obtain the required calibration data through **122a.** For example, for calibration files, the paths of the required files will be specified. The organisation of calibration information will be considered below. In any case, parameters which will change the calibration data to be used include the polarisation, frequency, and a priori known DoA of the desired signal **102.**

There are two calibration methods which in principle can be performed only once, the Geometrical Calibrator **701** and the Antenna Calibrator **708.** This is not mandatory, though.

The Geometrical Calibrator **701** seeks to estimate the position of the auxiliary antennae **103** using metrology methods. Typical implementations include photogrammetry, which determines 3D models of targets using pictures taken from different orientations; and laser metrology. In any case the basic components are:

- The targets, the relative distance of which the Geometrical Calibrator **701** will determine. These targets will be placed in the antennae **103.** They can be retro-reflectors, LED, or otherwise. More than one target can be placed for each antenna **103.**

- A distance measurement hardware and software.

- A distance reference. Targets will also be placed in it. This reference should be robust against changes due to environmental conditions such as temperature.

- A reference coordinate system, in three dimensions. In principle, this coordinate system can be arbitrarily chosen. However, when adapting the DoA estimates in **404** to the MAI **114** requirements, the difference between the coordinate systems from both ALTS **150** and MA must be compensated in the Coordinate Transformation module **505.** For this reason it may be advisable to define the coordinate system of the ALTS **150** according to that of the MA, by placing additional targets if required. Indeed, an additional advantage is that the MA coordinate system will be usually determined in a more precise way. This will be analysed in more detail in the Array Calibration subsection. An absolute coordinate system can also be considered, such as one referenced to the zenith and true north directions. In this case, appropriate surveying equipment must be included. Finally, it is important to notice that the origin of the coordinate system can be arbitrarily chosen since the DoA information is obtained from relative, and not absolute, distances.

From the targets a three point **703** per antenna **103** in a three dimensional coordinate system will be obtained, and will be given to the Calibration Data Collector **702.** These points will be geometrical references, whereas in truth we are interested in the phase centres of the antennae **103.** The phase centre of an antenna is a reference whence the emitted signal, in transmission, is supposed to propagate spherically. Due to the duality properties of antennae, this also applies for reception. In principle, the difference between geometrical references and phase centres will be the same for each antenna **103,** if the targets are placed in identical places and, thus, since we are interested in relative distances, the calibrated positions are valid representations.

For this to be true, though, the antennae **103** need to be the same or, at least, have the same position for the phase centres, relative to the geometrical reference. Since this may not be the case, it is interesting to complement the Geometrical Calibrator **701** with an Antenna Calibrator **708.** This block will compute amplitude and phase radiation patterns of antennae **103,** typically in anechoic chambers. From these, the position of phase centres for differing DoA can be computed, and thus some of the errors made in the Geometrical Calibrator **701** corrected. The amplitude and phase radiation pattern response for various DoA, frequencies and polarisations **709** will be sent to the Calibration Data Collector **702.**

These calibration methods may not be enough to guarantee the estimation of an accurate parametric model. Dynamical perturbations, errors in the placement of targets, and the offsets generated by the RC **104** require proper compensation. This is done by the Statistical Calibrator **704,** which performs a calibration using the incoming signal samples' statistics **109a** estimated in the MDP **105.** Combining these statistics with a priori calculated calibration models **710,** the Statistical Calibrator **704** computes and updates an improved model **705.** The parameters of the algorithms in this block are given by the MCIM **110** through the link **122b.**

The signals samples used by the Statistical Calibrator **704** can be of diverse origin. The simplest one is a Test Signal injected to the RC **104** couplers **202.** In this case, the Test Signal is typically a tone with the same frequency as that of the desired one **102,** specified by the End User **113** and sent from the MCIM **110** through **122c.** The signal is generated in the Test Signal Generator **706.** This calibration will compute the phase and amplitude offsets of the RC **104** beyond the couplers **202.** However, in this computation two spurious offsets will be included: those of the cables **707,** and those of the coupler **202.**

In order to compensate these, they must be previously calibrated in the Component Calibrator **713,** using Scattering-parameters **714** measurement devices, and included in the Calibration Data Collector **702.** These parameters describe the electrical behaviour of linear electrical components and networks, and can be used to determine the phase and amplitude changes which apply to an electrical steady-state stimulus as it traverses the corresponding component or network. The cables **707** must also be phase-stable with respect to differences of temperature and bending angles among them, if there are significantly different routing paths.

The Component Calibrator **713** will calibrate each component in the RC **104** prior to their integration if couplers **202** are not present in the RC **104.**

The Test Signal can also be sent to one or several test antennae **123,** to be received by the ALTS **150,** as already explained. In this case the Test Signal can be a tone or have a more complex modulation format, provided it is adequate to the RC **104** and Digital Conditioner' **302** characteristics. Modulation parameters are contained in **122c.**

The calibration processing algorithms will be examined in more detail afterwards.

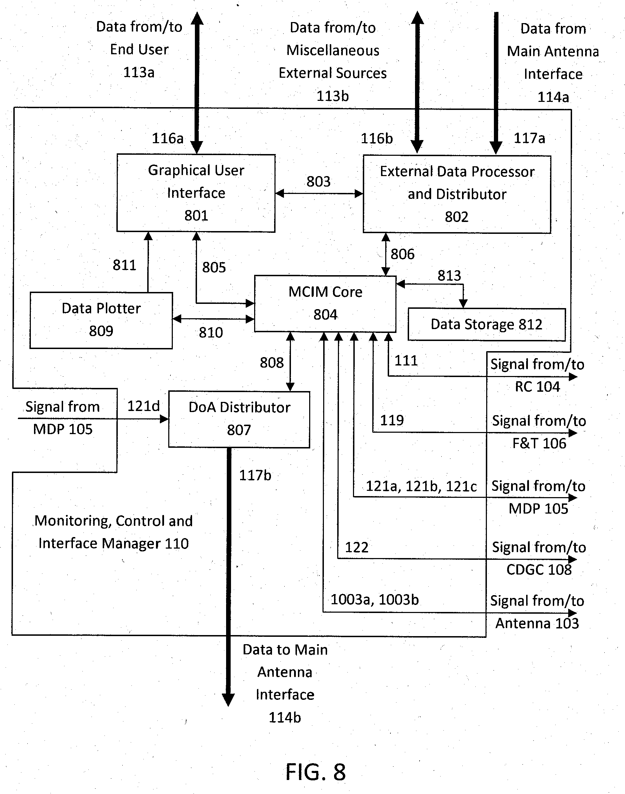

The final subsystem, the MCIM **110,** is detailed in FIG. 8. It includes a GUI **801** which serves as a visual interface for the End User **113a.** Using it the user can specify and verify the value of several parameters **116a,** and operate the system.

The GUI also shows parameters obtained from other external sources **113b** and from the MAI **114a.** These are given by the External Data Processor and Distributor **802** through the link **803.** Any number of information parameters can be considered here, such as the local time and date for example. Conversely, the External Data Processor and Distributor also processes the external data obtained from the End User **113a** through the GUI **801.**

Data from **801** and **802** are given to the MCIM core **804,** which is in charge of the monitoring and control of all pertinent devices. Updated values in this process are sent back to **801** and **802.** The MCIM core **804** is also in charge of the DoA Distributor **807,** which takes the calculated DoA and the time stamp from the MDP **105** and sends it to the MAI **114b** through the link **117b,** which can be of a varied nature; for example, an Ethernet link.

An internal functionality of the MCIM Core **804** is the compilation of logs and logging information, obtained from events in other subsystem and those provoked by the End User **113a.** The logs can be shown in the GUI through **805.**

The information which arrives to the MCIM Core can be stored in the Data Storage **812** component. This component can be a local or remote database, files, etc. The stored information can be used at a later time, so that **813** is a read/write interface.

Another functionality of the MCIM **110** is the plotting of results in the Data Plotter **809,** obtained from information compiled by the MCIM Core **804** and sent through the interface **810.** Some generalisations in the interfaces between subsystems may be required for a more complete plotting. For example, the interface **121d** could also include the digital signal samples, since this information is more complete for plotting purposes than the mere calculated DoA. In any case, it is the MCIM Core **804** the block in charge of collecting, storing and distributing the required information. Plots **811** are shown in the GUI **801.**

MCIM functionality can be expanded. Indeed, beyond the specified signals, parameters such as temperature, humidity, alarms, faulty elements, etc. can also be included in the MCIM Core **804,** provided the adequate sensor is in place in the pertinent subsystem, along with the corresponding interface. This is why all interfaces of the MCIM Core **804** are bidirectional. Additional features such as HVAC (Heating, Ventilation and Air Conditioning), fire detection and extinguishing, etc. Will also be the responsibility of the MCIM Core **804,** and potential additional interfaces with the site structures where the elements of the ALTS **150** are located can be considered.

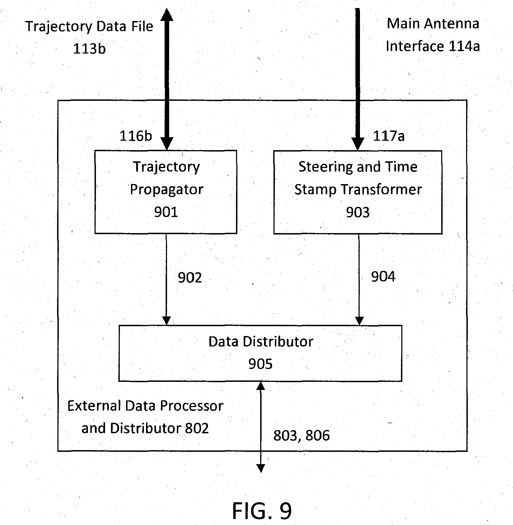

FIG. 9 is an exemplary composition of the External Processor and Distributor **802.** In it two important types of data are obtained.

On one hand there is the trajectory information of the desired signal **116b,** which can be obtained from Trajectory Data Files **113b.** These files may be located in the same computer, in the Internet Network, etc. Depending on their format, a mathematical propagation may be required, using a Trajectory Propagator **901.** The complete trajectory **902** is distributed to the GUI **801** and the MCIM Core **804,** thus allowing its use in the MDP **105** for interferer discrimination in the Signal Tracker and Discriminator **305.** The distribution of data is performed in the Data Distributor **905.** The complete trajectory information can also be uploaded to **113b,** in order to have updated values.

On the other hand the MA steering information **117a** is obtained from the MAI **114a.** This is adapted to the ALTS **150** format in the Steering and Time Stamp Transformer. The adapted information **904** is once more given to the Data Distributor **905.**

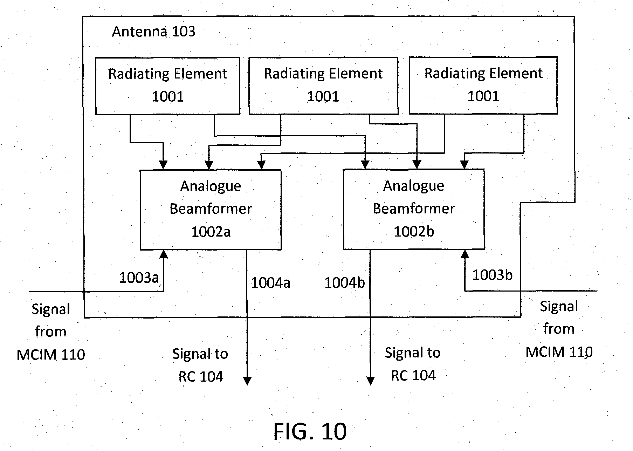

Up until now, antennae **103** have been considered as a single radiating element. The special case of antennae **103** which in turn are sub-arrays of radiating elements is considered in FIG. 10.

For clarity purposes in the figure, the antennae **103** are made of three Radiating Elements **1001** each, although a different number can be considered. Also, the dual-polarisation case is shown. The adaptation to a single-polarisation one is obvious.

The signals in each Radiating Element **1001** are combined for both polarisations in the Analogue Beamformers **1002a** and **1002b.** In an exemplary configuration, these beamformers will be composed of phase shifters, variable attenuators/amplifiers, and a combiner. The specified phase value in **1003a, 1003b** will allow performing an electronic steering, thus increasing the FoV of the antenna **103.** On the other hand, the amplitude value in **1003a, 1003b** will allow controlling radiation pattern characteristics, mainly SLL (Side Lobe Level). Also, a zero amplitude value can be considered to deactivate a given analogue branch prior to analogue beamforming. This is useful in scenarios where G/T is not a priority, but where the vehicle **101** is moving very fast.

For a complete Test Signal Injection calibration, a coupler should be added prior to the Analogue Beamformers **1002a** and **1002b,** although this will increase the number of required cables **707.**

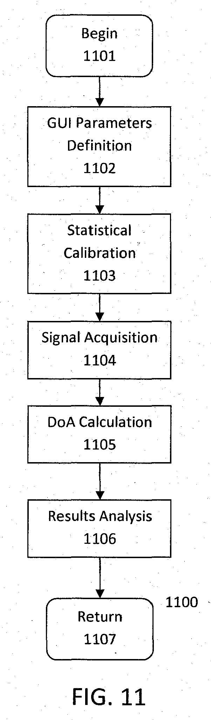

FIG. 11 shows an exemplary flow chart of the processing to be performed by the ALTS **150.** After initialisation **1101,** the End User **113** defines the pertinent parameters in the GUI **1102** and starts the acquisition **1104** or the calibration **1103.** If Test Signal Injection is available, it is recommended to automatically perform it prior to acquisition to compensate dynamical changes in the RC **104.** If not, a statistical calibration should be performed some minutes before the acquisition, although this is not mandatory.

During the acquisition of digital signal samples the DoA is calculated and sent to the MAI **1105.** The user can analyse the obtained results through the plots in the GUI **1106,** prior to the end of operations **1107.**

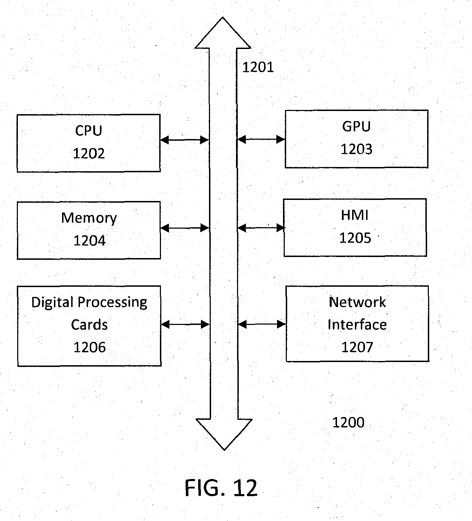

FIG. 12 shows an exemplary representation of the hardware components needed for the MDP **105,** the F&T **106,** the CDGC **108,** and the MCIM **110.** This computer system **1200** includes a CPU (Central Processing Unit) **1202;** a GPU (Graphical Processing Unit) **1203;** a memory **1204,** which includes Main and Static Memories; a HMI (Human Machine Interface) **1205,** which includes alpha-numeric input device, cursor control device and video display; Digital Processing Cards **1206,** where the analogue-to-digital conversion and some of the MDP **105** processing will be carried out; and a Network Interface **1207,** which can connect the system to external networks such as the Internet. All these are connected through one or several buses **1201.** Not all the components are mandatory, and additional ones could be included, such as drive units, etc.

More generalisations to the system in FIG. 12 can be considered. For example, there can be more than one element of a given component. As a possibility, it may be that there are more than one CPU **1202,** one for directly controlling the Digital Processing Cards **1206,** and another one for performing dedicated statistical algorithms, perhaps in conjunction with the GPU **1203.** Also, some or all of these components may be remotely located.

The presence of a GPU can be interesting to carry out some resources consuming algorithms, such as frequency MUSIC. In this case, the bus **1201** between the Digital Processing Cards **1206,** the CPU **1202** and the GPU **1203** should have a high bandwidth.

**Simultaneous localisation and tracking**

If the antennae **103** have a great FoV, which can be achieved with smaller sized components or with array solutions as presented in FIG. 10, the ALTS **150** could be used to simultaneous acquisition of more than one desired signal **102.** Indeed, taking advantage of the Signal Tracker and Discriminator **305,** more than one desired DoA can be calculated. These can then be given to the same MAI or to different ones, all of them connected through **117** to the MCIM **110.**

Once more the restriction that must be met in a frequency bin is that the number of desired signals plus the number of interfering signals, assumed point-like, plus one must be equal or less than the number of antennae **103.** Also, the radiation pattern of these must guarantee that enough power contribution from the desired signals **102** is received, taking into account their angular location. Finally, in order to discriminate them, the same conditions discussed with interferers must be met.

For satellite communications, due to the wider angular window of exploration it becomes possible for example to obtain the position of closely spaced satellites. There are three cases that can benefit from it:

- Clusters of satellites: angular determination and tracking can be made simultaneously for all these satellites by a single ALTS **150.**

- Collocated GEO satellites: simultaneous angular position determination of all satellites can be made with this system. What is more, even the acquisition of satellites in adjacent orbital slots can be performed at the same time. If the calibration of the system is good enough, then the accuracy and precision of the DoA estimation provided by the super-resolution algorithm could be used to determine the different orbits.
- Signal discrimination when several satellites passes are concentrated at the same time, by distinguishing between multiple satellites. When two or more satellites are in the ALTS **150** FoV, the algorithm easily distinguishes and locates the satellites, which is not possible using the monopulse or step-track methods, for instance.

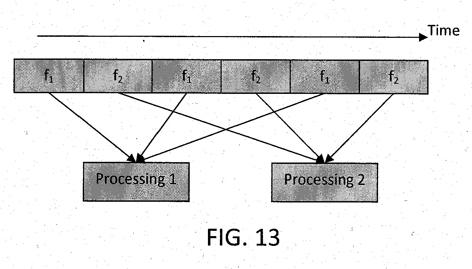

A similar application is the acquisition of launchers, or other air or spaceborne vehicle **101** which emits more than one signal **102** at different polarisations and/or frequencies. In this case, a simultaneous acquisition can be performed with the received digital signal samples, if divided in different time slots. For the case of two desired signals, half of them will be processed in the RC **104** and the MDP **105** with a given LO frequency and polarisation, for dual-polarised antennae **103,** and the other half with the other values. The remaining statistical processing will be performed for both kinds of time slots separately. This is shown in FIG. 13, particularised for the case of frequency changes. The extension to a higher number of desired signals is immediate.

The discrimination in **305** is simpler, since the change in LO frequency and/or polarisation renders one of the signals very weak in the time slots which have the parameters defined for the other signal, and vice versa. This is not true, though, if the frequencies are closely spaced, which is not usual, or if two signals are sent with the same frequency and orthogonal polarisations, while the antennae **103** use a single polarisation scheme. In this case, a complex discrimination can be performed, as discussed in the interferers' case, if the antennae **103** are linearly polarised, and the desired signals circularly polarised. In this case, of course, both signals will be present in both kinds of time slots with similar power levels.

It may be, for rotating vehicles **101** for example, that only one of two emitted signals can be received, but the ALTS **150** does not know a priori which one will be visible when the acquisition is started by the End User **113.** In this case, the signal discrimination must include and SNR estimator, which as the DoA Estimator **404** uses the statistics of the received digital samples. Those time slots with the lowest SNR will correspond to the signal which is not visible, and thus with less reliable, if at all, DoA calculations. The others will be those to be considered valid. For this to work properly, the rotation of the vehicle **101** must be slow enough so that the visibility or non-visibility of the signals does not change during the digital samples' acquisition time in the MDP **105.**

The preceding considerations can also be carried out if the ALTS **150** has more than one kind of RC **104,** each one with a different LO signal **107** and/or polarisation antenna **103.**

**Array geometrical layout**

As mentioned, arbitrary geometrical layouts can be considered. However, there are some designing parameters which must be taken into account, namely, the trade-off ensuing from the separation distance among auxiliary antennae **103.**

Indeed, for higher separations the resolution capabilities of the DoA Estimator **404** are improved and, along with them, the white noise robustness. On the down side, for higher separations the calibration process implies more stringent requirements on one hand, and on the other the influence of grating lobes is increased. Calibration will be dealt with in the next sub-section. In this one we will be concerned with grating lobes.

Grating lobes have two effects on the ALTS **150.** Firstly, interferers outside the angular uncertainty window can produce local maxima or minima in the DoA Estimator **404** cost function inside said window; maxima for maximisation algorithms, minima for minimisation ones. In principle, these can also be discriminated in **305,** although in some pathological cases the resulting spurious peak or null may be too close to the desired one. This is unlikely, though, if a tracking stage is included in **305.** Besides, interferers will be partially filtered by the auxiliary antennae **103** radiation patterns. This last point suggests that a way to fight grating lobes perturbations is by using more directive antennae **103.** However, for more directive antennae **103,** smaller angular uncertainty windows must be considered, rendering the ALTS **150** less flexible. This trade-off can be mitigated, though, with antennae structures such as that shown in FIG. 10.

The other effect is that, for large enough distances, a single desired signal may produce more than one maximum or minimum in the angular uncertainty window. Although this effect can be somehow mitigated in **305** as before, some white noise robustness is lost unless the maximum level of uncertainty dispersion of the DoA that can be dealt with by the ALTS **150** is once more reduced.

An effective way to take a medium approach to this problem is to use non-uniform array layouts, such as to take advantage both of high resolution capabilities of distributed arrays, and of the fact that compact ones have low grating lobes. Any number of options for this geometrical definition can be found in the literature, such as MRA (Minimum Redundant Arrays) or non-redundant arrays. Schemes such as random arrays, or geometrical layouts defined with Genetic or Particle Swarm optimisations algorithms can also be applied, although these require a high number of antennae **103** to be effective.

Another point concerning the array geometrical layout is the fact, discussed during the explanation of the Geometrical Calibrator **701,** that the coordinate system of the array must be referenced with respect to the one of the MA. One relatively simple way of doing this, in the case of the MA being a large reflector antenna, is to attach the auxiliary antennae **103** to the reflector's rim. As part of the Geometrical Calibrator **701,** targets will be placed to precisely define the MA coordinate system with respect to the ALTS **150.** MA plane, broadside and azimuth directions can be defined, for example. This also will increase the effective FoV of the antennae **103,** since they can benefit from the mechanical steering of the MA.

In this case, though, a special consideration must be taken into account. Indeed, since the MA is a steerable antenna, the ALTS **150** will have moving antennae **103,** which are subject to perturbations in their positions. Some of these will be stochastic in nature, such as those caused by temperature gradients or wind deformations, and will be ignored or compensated in the Statistical Calibrator **704.** Other perturbations, though, will be deterministic. The main ones will be those provoked by gravitational deformations of the reflector's rim, as a function of elevation. In this case, the Geometrical Calibrator **701** must perform a calibration of positions for different elevation steerings of the MA, and store all of them, or store a set of parameter defining a mathematical model of the resulting variations. Said model can be obtained through Least Squares approximations, among others. The models, in any case, or the set of position estimations, will take into account all changes in operating parameters which cause deterministic changes in the relative positions of the auxiliary antennae **103.**

The distance measurement, for this topology, can be performed with the help of a crane or by placing the cameras behind the auxiliary antennae **103,** in the MA supporting structure.

For this geometrical layout, grating lobes can also be mitigated, if the MA antenna has a large enough radius. Non-redundant arrays can be defined in a circular fashion, or just a sector of the MA's perimeter can be used.

**Array calibration**

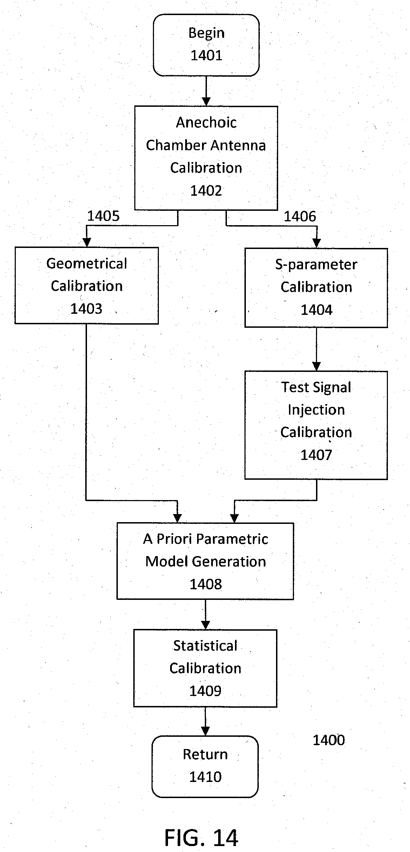

As already commented, calibration can be performed with a number of methods and algorithms and a variety of combinations of said methods and algorithms. FIG. 14 shows an exemplary configuration **1400** of a full calibration of the ALTS **150.** Although it is not the only possible configuration, it has been chosen because it is one of the most complete, and clearly represents the consecutive stages in the modelling of the array and the required combination of results for obtaining the final calibration parameters to be used by the MDP **105.** It must be pointed out that this full process is not initiated by the End User **113** through the GUI **801.** Rather, some of the calibration methods, namely **1402, 1403** and **1404,** can be performed outside the MCIM **110** supervision, and their results directly stored in the Calibration Data Collector **702.** Also, they can be carried out much before the start of operations in the ALTS **150.**

This calibration process begins **1401** with the Anechoic Chamber Antenna Calibration **1402.** As commented, this calibration's aim is to obtain a radiation pattern model of each antenna **103,** in phase and amplitude, as a function of the steering direction, which can be expressed in spherical coordinates $\theta$ and $\phi$. The number of steering points and the range to be considered will depend on the operation frequency and the required accuracy of the model. Different models should be obtained for all polarisations and frequency schemes to be considered. Once more, the number of frequency points will depend on the required accuracy. The obtained radiation patterns can be expressed as relative to a reference steering, typically broadside, since only relative information is of interest.

The use of an Anechoic Chamber mitigates the effect of reflections, although alternative measurements can be considered. Also, in principle, each antenna **103** is measured separately. If possible, it is interesting to calibrate them simultaneously in their final geometrical layout, since this may preclude the use of the Geometrical Calibration **1403.** However, such a scenario is not possible for highly distributed arrays and, in any case, mechanical deformations could affect the validity of the Anechoic Chamber model. Anyhow, the possibility remains for some applications, especially very compact and stiff arrays.

The obtained information can be processed in two alternative ways. On one hand, from it a phase centre model **1405** of each antenna can be obtained, relative to the reference one. This model will meet the following equation:

$$\Delta p_n = g_{pol,f}(\theta, \varphi)$$

$\Delta p_n$ is the displacement of one of the n-th antenna coordinates (x, y or z), as a function of the spherical coordinates. Said function g has as configuring parameters the signal's polarisation "pol" and its frequency "f". Other coordinates, such as elevation and cross-elevation offsets, can be considered in the preceding equation. Also, $\Delta p_n$ will be 0 for broadside direction.

This information can be combined with the one obtained in the Geometrical Calibration **1403,** in order to transform the geometrical positions into phase centres. Indeed, when building the cost function in the DoA Estimator **404,** the set of array positions to be used for a given array steering $\theta_0$ and $\varphi_0$ will be:

$$\boldsymbol{p}_T = \boldsymbol{p} + \Delta\boldsymbol{p}\,(\theta_0, \varphi_0)$$

It is a matrix equation, with Nx3 real matrices, where N is the number of auxiliary antennae **103. p** is the set of positions obtained in **1403,** and $\Delta\boldsymbol{p}$ those deduced from **1402.** As mentioned in the Array Geometrical Layout subsection, in some cases the set of positions from the Geometrical Calibrator **1403** will vary according to some additional parameters, such as the MA elevation steering. In this case, the preceding equation becomes:

$$\boldsymbol{p}_T = \boldsymbol{p}(el_{MRS}, \dots) + \Delta\boldsymbol{p}\,(\theta_0, \varphi_0)$$

As many parameters in **p** as required can be considered. Alternatively, a general model as a function of all parameters can be derived, such as a polynomial fit:

$$\boldsymbol{p}_T = a_1 + a_2 el_{MRS} + a_3 el_{MRS}^2 + \cdots + b_1 + b_2\theta + b_3\theta^2 + \cdots + c_1 + c_2\varphi + c_3\varphi^2 + \cdots$$

In the preceding equation, frequency and polarisation parameters can also be added. The advantage of this model is that it can be fully stored with a reduced number of parameters.

On the other hand, the phase centres model is not mandatory. Indeed, the amplitude and phase responses **1406** from the antenna patterns can be combined with the S-parameter Calibration **1404.** This calibration seeks to obtain the amplitude $\Delta\alpha$ and phase offsets A$\emptyset$ among RC **104.** The RC **104** components can be calibrated separately or partially assembled with a Vector Analyser, for example. Total phase and amplitude offsets, which are Nx1 vectors, are computed as follows:

$$\Delta\boldsymbol{a} = \Delta\boldsymbol{a}_1 \times \Delta\boldsymbol{a}_2 \times \dots \times \Delta\boldsymbol{a}_m$$

$$\Delta\boldsymbol{\phi} = \Delta\boldsymbol{\phi}_1 + \Delta\boldsymbol{\phi}_2 + \cdots + \Delta\boldsymbol{\phi}_m$$

Where m components and/or assemblies are considered. Also, vector and matrix operations are carried out element-wise. These offsets are unique, but do not include the antennae **103** contribution. This can be added directly with the radiation patterns results, with the peculiarity that these will be a function of steering directions and with frequency and polarisation as configuring parameters (not shown in the equations for simplicity's sake):

$$\Delta\boldsymbol{a}(\theta, \varphi) = \Delta\boldsymbol{a}_0(\theta, \varphi) \times \Delta\boldsymbol{a}_1 \times \Delta\boldsymbol{a}_2 \times \dots \times \Delta\boldsymbol{a}_m$$

$$\Delta\boldsymbol{\phi}(\theta, \varphi) = \Delta\boldsymbol{\phi}_0(\theta, \varphi) + \Delta\boldsymbol{\phi}_1 + \Delta\boldsymbol{\phi}_2 + \cdots + \Delta\boldsymbol{\phi}_m$$

These offsets can be taken as relative to a reference antenna. Their main disadvantage is that they do not take into account dynamical effects which greatly affect analogue components, such as ageing and temperature drift. One way to compensate this is to combine the preceding calibration with an updated model, through a Test Signal injection Calibration **1407,** through a coupler **202** in each RC **104.** This injection can be performed shortly before ALTS **150** operation, with the adequate LO frequency and VGA/programmable attenuator **206** state.

From the obtained phase and amplitude offsets, though, must be eliminated the contribution of non-desired components, mainly the contribution of the test cables **707** and the coupler transition, which is not the same which is followed by the desired signal in the RC **104.** Thus we have:

$$\Delta a_{desired} = \frac{\Delta a_{test}}{\Delta a_{cables} \times \Delta a_{coupler}}$$

$$\Delta\phi_{desired} = \Delta\phi_{test} - \Delta\phi_{cables} - \Delta\phi_{coupler}$$

To these will be added the offsets due to the antennae **103,** if no phase centres model is implemented, the S-parameters of the components prior to the couplers **202,** and those of the transitions of the couplers **202.** So that:

$$\Delta a_{updated} = \Delta a_0(\theta, \varphi) \times \Delta a_1 \times \Delta a_2 \times \Delta a_{desired}$$

$$\Delta\phi_{updated} = \Delta\phi_0(\theta, \varphi) + \Delta\phi_1 + \Delta\phi_2 + \Delta\phi_{desired}$$

Finally, if so desired, this result can be combined with the one obtained in **1404,** as follows:

$$\Delta a_T = \mu\, \Delta a_{updated} + (1 - \mu)\, \Delta a$$

$$\Delta\phi_T = \mu\, \Delta\phi_{updated} + (1 - \mu)\, \Delta\phi$$

The $\mu$ parameter will decide which model is more trustworthy for the final estimation.

The positions, amplitude and phase offsets are combined to obtain an A Priori Parametric Model in **1408.** This model follows the equation below, which defines the so called array SV (Steering Vector):

$$v_T = \Delta a_T exp\left[j\frac{2\pi}{\lambda} p_T\, u + j\Delta\phi_T\right]$$

Where A is the central wavelength of the desired signal **102** central wavelength, assuming a narrowband model, and *u* is a 3x1 vector of cosine directors:

$$u = \begin{bmatrix} sin\theta\, cos\varphi \\ sin\theta\, sin\varphi \\ cos\theta \end{bmatrix}$$

This model can be improved with additional Statistical Calibrations **1409,** which process received digital signal samples. This stage may be mandatory if no Test Signal injection Calibration **1407** is carried out, in order to compensate dynamical errors. Also, in some scenarios such as high operating frequencies, the position estimation will have very stringent requirements. Thus, improved modelling may be critical.

The Statistical Calibration **1409** can be implemented with different algorithms. One of the simplest alternatives is the Least Squares Calibration. It starts with an estimation of the Nx1 signal subspace vector $v_s$, as in the Statistics Estimator **403,** for different steering directions, so that the resulting matrix $\mathbf{V}_{err}$, of size M x N, where M is the number of measurements, is defined as:

$$\boldsymbol{V}_{err} = \begin{bmatrix} v_{S1}{}^T/v_{T1}{}^T \\ v_{S2}{}^T/v_{T2}{}^T \\ \vdots \\ v_{SM}{}^T/v_{TM}{}^T \end{bmatrix}$$

In the equation $v_{Tm}$ is the a priori calibration model for the steering corresponding to the m-th measurement. The vector division is performed element-wise. In this way, in $\boldsymbol{V}_{err}$ we only have the effects of modelling errors from the A Priori Parametric Model Generation **1408.**

The residual amplitude offsets $\Delta a_{err}$ are computed taken the mean of the absolute value of $V_{err}$ for all steerings. Regarding positions, defined as x, y and z coordinates, and phase offsets, the Least Squares equation is then computed as:

$$
\underbrace{\begin{pmatrix}
\frac{2\pi}{\lambda} \times \sin\theta_1 \cos\varphi_1 & \frac{2\pi}{\lambda} \times \sin\theta_1 \sin\varphi_1 & \frac{2\pi}{\lambda} \times \cos\theta_1 & 1 \\
\frac{2\pi}{\lambda} \times \sin\theta_2 \cos\varphi_2 & \frac{2\pi}{\lambda} \times \sin\theta_2 \sin\varphi_2 & \frac{2\pi}{\lambda} \times \cos\theta_2 & 1 \\
\frac{2\pi}{\lambda} \times \sin\theta_3 \cos\varphi_3 & \frac{2\pi}{\lambda} \times \sin\theta_3 \sin\varphi_3 & \frac{2\pi}{\lambda} \times \cos\theta_3 & 1 \\
\vdots & \vdots & \vdots & \vdots \\
\frac{2\pi}{\lambda} \times \sin\theta_M \cos\varphi_M & \frac{2\pi}{\lambda} \times \sin\theta_M \sin\varphi_M & \frac{2\pi}{\lambda} \times \cos\theta_M & 1
\end{pmatrix}}_{A}
\underbrace{\begin{pmatrix}
x_1 & x_2 & \cdots & x_N \\
y_1 & y_2 & \cdots & y_N \\
z_1 & z_2 & \cdots & z_N \\
\varphi_1 & \varphi_2 & \cdots & \varphi_N
\end{pmatrix}}_{X}
= \underbrace{\angle V_{err}}_{B}
$$

Matrix X includes the unknowns to be estimated to form the residual terms $p_{err}$ and $\Delta\phi_{err}$, and can be computed using the Moore-Penrose pseudo-inverse of **A:**

$$
X = \left( A^H A \right)^{-1} A^H B
$$

The number of measurements must be at least four, since four unknowns per antenna **103** are to be estimated. In these multicollinearity must be avoided. Finally, in **1410,** the improved calibration model is calculated using the following parameters:

$$
\Delta a_{improved} = \Delta a_T \times \Delta a_{err}
$$

$$
\Delta\phi_{improved} = \Delta\phi_T + \Delta\phi_{err}
$$

$$
p_{improved} = p_T + p_{err}
$$

Since matrix **B** contains angular information, there is a modulo $2\pi$ uncertainty, so that residual phase and amplitude errors in $V_{err}$ must be small enough to guarantee that said uncertainty does not affect the calibration model or, conversely, the a priori calibration model must be good enough. This restriction can be somewhat relaxed if position and phase errors are calculated separately. Indeed, the column of **A** corresponding to the phase offsets has identical values, so that position can be firstly calibrated using differential measures $dV_{err}$:

$$
dV_{err} = \begin{bmatrix}
\dfrac{v_{err2}}{v_{err1}} \\
\dfrac{v_{err3}}{v_{err2}} \\
\vdots \\
\dfrac{v_{errM}}{v_{errM-1}}
\end{bmatrix}
$$

Where $v_{errm}$ is the m-th row of $V_{err}$, and vector division is performed element-wise. Phase offsets can be obtained afterwards with the updated position estimation.

One of the drawbacks of Least Squares is that it requires a good knowledge of the received signal's DoA. More robust methods, which deal with uncertainty in this estimation, can be considered, such as Total Least Squares or Partial Total Least Squares. Also, the DoA can be jointly estimated, performing a full auto-calibration of the array. Maximum Likelihood or Maximum A Priori algorithms can be considered. Their main problem is their high computational load. This can be treated using efficient optimisation techniques such as SAGE (Space-Alternating Generalised Expectation-maximisation). The advantage of a full auto-calibration is that it can be performed off-line, prior to the acquisition of a desired signal, or on-line, i.e., when acquisition and calibration are carried out simultaneously, with the potential increase in dynamical effects' mitigation capabilities.

Previous equations do not include coupling effects between antennae **103**. However, since this perturbation can be assumed to be DoA-independent, it can be included in the Least Square or similar model, although more steerings may be required. The coupling matrix can also be estimated in the Anechoic Chamber Antenna Calibration **1402,** if all elements are calibrated simultaneously in their final layout.

Another generalisation of the calibration process is the one that considers analogue subarrays, as in FIG. 10. The pre-beamforming and post-beamforming stages must be calibrated separately, bearing in mind the possible phase shifters and attenuators stages, along with additional coupling errors.

As already commented, the Statistical Calibration **1409** can be performed with calibration towers or probes **123,** or with signals **124** from air or spaceborne vehicles **123**. The advantage of the first option is that higher SNR, and thus lower integration times, can be considered. However, if the antennae **103** are not very directive, multipath components can be troublesome, and the calibrating algorithms must be designed to ensure appropriate robustness.

A special case of probe calibration is their placing in the near-field of the antennae **103.** In this scenario a near to far-field transformation must be performed. This configuration can be envisaged, for example, for antennae **103** placed in the rim of the reflector constituting part of the MA, and several probes placed in said reflector's feed. Precautions must be taken though, since the antennae **103** radiation pattern must be properly designed regarding amplitude and phase response in the angular directions of the probes in order to guarantee acceptable test signal reception.

Also, the signal received by the MA can be used to help the calibration process, using it as a reference for example. Indeed, since its SNR will be higher it can improve the Statistical Calibration **1409** performance.

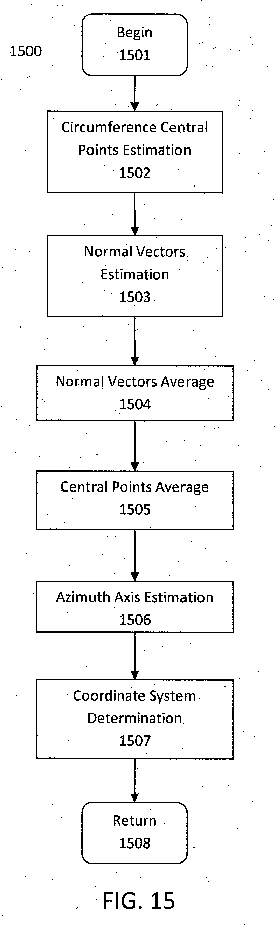

As already mentioned in the description of the Geometrical Calibrator **701,** if the antennae **103** are to share the same coordinate system as the MA, a dedicated procedure must be implemented, as part of the Geometrical Calibration **1403,** to derive an adequate coordinate system for the ALTS **150.** FIG. 15 shows an exemplary configuration **1500** of this procedure, although variations can easily be considered, as long as the result is an orthonormal coordinate system. The configuration **1500** assumes that the MA is a reflector antenna. The targets used by the distance measurement software are placed in one or several concentric circumferences on the MA dish, approximately following the perimeter of this dish. The easier placement is on its rim, although additional circumferences can be used to decrease the manual placement error.

A Central Point Estimation **1502** is performed for each circumference, taking the average of the Cartesian coordinates of all targets involved, as given by the distance measurement software. After this, a Normal Vectors Estimation **1503** is carried out, which determines the normal vectors to the planes defined by the aforementioned circumferences. The planes are a Least Squares approximation using the Cartesian coordinates of the involved targets. If more than one circumference is defined, averages of the normal vectors **1504** and of the central points **1505** are taken.

The Azimuth Axis Estimation **1506** takes the Cartesian Coordinates of targets that must be placed in a curve defined by the gradient of the MA dish, starting on the central part and ending on the lowest one. Here, lowest must be understood as the part of the dish with the least absolute height, when the MA is steered towards 0° of elevation. The aximuth axis is defined as the line which is a Least Squares approximation of the Cartesian coordinates of the targets involved.

The average of the central points will be the new coordinate system origin, the average of the normal vectors the z-axis, and the projection of the azimuth axis on a plane obtained from a given circumference will be the x-axis. The y-axis can be obtained directly from this information. The axes are subsequently normalised using a suitably placed distance reference. All this is contained in the Coordinate System Determination **1507** stage.

A last comment regarding calibration is the fact that the explained parametric modelling has the advantage that the array model obtained from a restricted set of steerings can be extrapolated to different ones. However, if the calibration is to be performed for the full FoV with sufficient resolution, non-parametric calibration may be considered, In this case, the required phase and amplitude response of the array will be computed as an interpolation of the available ones.

## Space-frequency estimators

The central objective of the system is to reduce the a priori angular uncertainty of a signal source's location using array digital signal processing, and bearing in mind a very noisy scenario.

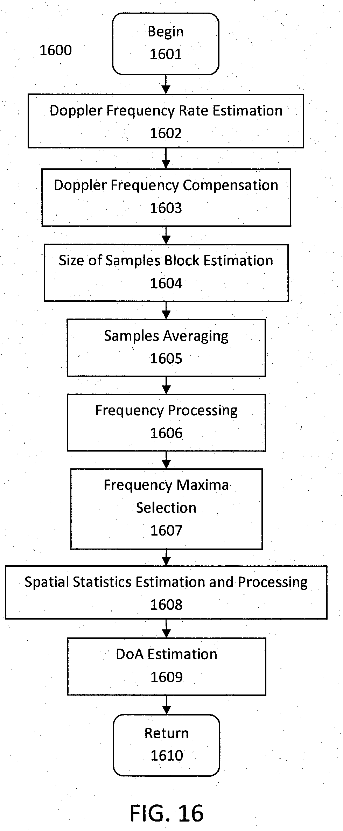

In order to do so, the central parts of the system, which are included in the Statistical Processor **303,** will be analysed in more detail in this sub-section. FIG. 16 shows an exemplary configuration **1600** of the whole DoA calculation process. As commented, the Frequency Shift Compensator **401** needs an estimation of the Doppler frequency rate in **121 b1.** The DoA calculation process begins **1601** with a Doppler Frequency Rate Estimation **1602,** which can be computed taking into account a priori information from the space- or aircraft trajectory, contained for example in a TLE (Two Line Element) file **113b,** as well as the timestamp from the samples, obtained in the Time Stamping **304** block. Indeed, the Doppler frequency shift is estimated as follows:

$$f_{est}(t_k) = f_{TX} \frac{c}{c \pm v_{TX}(t_k)} - f_{TX}$$

c is the light speed in the considered propagation medium, $t_k$ is a given absolute time, as provided by the time stamp, and $v_{TX}(t_k)$ is the radial speed of the air-or spacecraft at said time. In the formula it is implied that the ALTS **150** is motionless. A generalisation which takes into account the movement of the ALTS **150** can be easily derived. $v_{TX}(t_k)$ is computed as:

$$v_{TX}(t_k) = \frac{dR(t)}{dt}\bigg|_{t=t_k}$$

Derivative calculus can be approximated using two values as close to the time of interest as possible. With this in mind the preceding equation becomes:

$$\frac{dR(t)}{dt}\bigg|_{t=t_k} \approx \frac{R(t_k+h) - R(t_k)}{h}$$

Where h should be as small as possible. In this last equation R(t) is the distance between the ALTS **150** and the air- or spacecraft, defined as:

$$R(t) = (R_T + h(t)) \sqrt{1 + \left(\frac{R_T}{R_T + h(t)}\right)^2 - 2\frac{R_T}{R_T + h(t)}\cos\gamma(t)}$$

$R_T$ is the Earth radius, which will depend on the geographical location of the ALTS **150,** taking into consideration that the Earth is an oblate spheroid. The radius will change of course if the ALTS **150** is not installed on Earth. On the other hand h(t) is the satellite height, defined as:

$$h(t) = \sqrt{x_i^2(t) + y_i^2(t) + z_i^2(t)} - R_T$$

$x_i(t)$, $y_i(t)$ and $z_i(t)$ are the inertial coordinates of the air- or spacecraft, obtained from the TLE or similar file **113b** and, eventually, an orbital propagator algorithm. Other coordinate systems can be used. If no values are available for the desired time $t_k$, an interpolation or extrapolation shall ensue. In the equation defining R(t), the angle $\gamma(t)$ is equal to:

$$\gamma(t) = \cos^{-1}\left[\cos(lat_S(t)) \times \cos(lat_{ET}) \times \cos|lon_{ET} - lon_S(t)| + \sin(lat_S(t)) \times \sin(lat_{ET})\right]$$

$lon_{ET}$ and $lat_{ET}$ are respectively the East Longitude and the North Geodetic Latitude of the location of the ALTS **150.** $lon_S(t)$ and $lat_S(t)$ are the same concepts for the sub-satellite point. These are obtained from the inertial coordinates, using a rotation matrix so that the Earth coordinate system is fixed, and applying spherical trigonometric formulae.
Additional data required in the preceding computations, besides the Trajectory Data File **113b,** can be stored in the system Memory **1204** or obtained from the Network Interface **1207.**

Finally, the Doppler rate is estimated as follows:

$$\dot{f}_{est}(t_k) \approx \frac{f_{est}(t_k + h) - f_{est}(t_k)}{h}$$

The value, as already commented, is used for the Doppler Frequency Compensation **1603**:

$$x_n[kT] = x_n[kT] * exp\{-j\pi\dot{f}_{est}(t_k) \times (kT)^2\}$$

From this equation, it is clear that:

$$t_k = t_0 + kT$$

Where $t_0$ is the absolute time of the first sample. For simplicity, a single average value of $f_{est}$ can be used, or a parametric model derived from several estimations.

After this comes the Size of Samples Block Estimation **1604,** i.e., the estimation of the total number of samples K which will be considered in the subsequent statistical processing stages. This value can be directly specified by the End User **113,** stored as a default value in the Memory **1204,** or estimated taking into account the concurring circumstances of the considered scenario **100.**

This last case will be analysed in more detail. Indeed, the optimum value for K mainly depends on the input SNR and $f_{resid}$, which is an estimation of the residual (i.e., non- compensated) frequency shift rate.

The SNR can be initially estimated using data from link budgets and stored, for example, in the Memory **1204.** The dominant criteria will be the type of air- or spacecraft and the elevation steering at the time of the acquisition. Thus, tables with SNR values can be stored for every air- of spacecraft of interest, with the possibility to carry out interpolations or extrapolations. It is advisable to store for each air- or spacraft and elevation three different values: best-case, worst-case and nominal, and finally select one of them through the decision of the End User **113,** or perform an average taking into account the statistical distribution of these values.

$f_{resid}$ can be obtained heuristically, or bearing in mind objective criteria as the available information of the considered scenario **100.** Errors which affect this value are errors in the estimation of the Doppler rate, instabilities in the involved PLL/FLL (Phase Lock Loop / Frequency Lock Loop), both from the air- and spacecraft or from the Local Oscillators in the Down Converters **205,** interpolation/extrapolation errors, finite-precision arithmetic errors, etc.

With the value of K in mind, the next step is the Samples Averaging **1605.** Firstly, the FFT of the samples is performed, for each digital channel. The resulting complex matrix $X_f$ will be used in the following stages, bearing in mind that it has an NxK size, although zero-padding can be performed to speed up the FFT calculation. Then, the absolute value of this matrix, $|X_f|$ , is calculated, and an average is carried out row-wise, resulting in a 1xK (with no zero-padding) real vector. This vector will be used in the next stage, the Frequency Processing **1606.** The preceding operations are equivalent to estimating the average frequency power spectrum density.

As already commented, the idea which motivates the Frequency Processing **1606** is to take advantage of non-uniform distribution of the power of the desired signal **102,** such as is the case when a carrier is present, so that only the frequency bins with maximum SNR are used for the subsequent spatial processing. This Frequency Processing **1606** can be carried out in several ways. Two of them will be detailed presently.

The simplest one is to select those frequency bins from the previous stage **1605** where peaks are detected, with a direct search algorithm. The main advantage of this solution is that it is efficient from a computational point of view. However, if the SNR is negative, or very small in all frequency bins, the peaks will not be appreciated and those containing the desired signal will not be identified. For these scenarios a frequency estimation algorithm which can operate with negative SNR is mandatory.

A possibility, already mentioned, is to use a frequency MUSIC algorithm based on Pisarenko method. This algorithm will take as input the IFFT (Inverse Fast Fourier Transform) of the real vector obtained from **1605,** a frequency range, $f_{range}$, so that peaks will be searched from baseband to this value, a frequency bin resolution, $f_{res}$, and the sampling frequency $f_s$. The main disadvantage of this algorithm is its computational load. The frequency spectrum to be maximised is obtained as:

$$\Psi_f(f) = \frac{1}{\boldsymbol{v}_f^H(f)(\boldsymbol{I} - \boldsymbol{U}_{SSf})\boldsymbol{v}_f(f)}$$

Where $(\ )^H$ denotes Hermitian transposition, and $\boldsymbol{I}$ is the identity matrix of size $N_f \times N_f$, with:

$$N_f = \left\lfloor \left| \frac{f_{range}}{f_{res}} \right| \right\rfloor + 1$$

⌊ ⌋denotes truncation to the lower natural number. On the other hand $v_f(f)$ is an $N_f \times 1$ complex vector whose n-th component is equal to:

$$v_{fn}(f) = exp\left\{ j2\pi(n-1)\frac{f}{f_s} \right\}$$

f can take any value between 0 and $f_{range}$ with an $f_{res}$ resolution step, so that the total number of possible values is exactly $N_f$. Finally $\boldsymbol{U}_{ssf}$ is obtained from the correlation matrix $\boldsymbol{R}_{ff}$ of the input real vector. This matrix in turn, of size $N_f \times N_f$ can be computed from $N_f$ values of the autocorrelation sequence of the input vector. An Eigen-decomposition is performed to $\boldsymbol{R}_{ff}$, and the number of signals present, $D_f$, is determined from the eigenvalues using statistical criteria such as the AIC, the MDL, or similar, as already mentioned.

The eigenvectors of $\boldsymbol{R}_{ff}$ corresponding to the $D_f$ largest eigenvalues are grouped in a single matrix $\boldsymbol{U}_{sf}$, of size $N_f \times D_f$, and finally:

$$\boldsymbol{U}_{SSf} = \boldsymbol{U}_{Sf}\boldsymbol{U}_{Sf}^H$$

The spectrum $\Psi_f(f)$ can be maximised either directly or taking advantage of non-linear optimisation procedures. Also, other spectral estimation algorithms can be considered, which can be seen as improvements of Pisarenko methods, such as Weighted MUSIC, or altogether different procedures, such as Maximum Entropy, or Higher Order Stastistics algorithms.

One possible criterium to apply for the election between a simple FFT spectrum maximisation and a more complex algorithm, is to select the last one when

$$\dot{f}_{resid} \times K \times T < 100\ Hz$$

Indeed, $f_{resid} \times K \times T$ is a measure of the frequency spread of the received signal. The higher it is, the lower the SNR in each frequency bin, and the more robust the selected algorithm must be.

Be it as it may, from the Frequency Processing **1606** will result a frequency spectrum which will contain peaks which must be selected in the Frequency Maxima Selection **1607** stage. In order to take into account errors in the estimation process, a given number of frequency bins will be taken around each spectral peak. If more than one peak is detected, the ensuing processing will be performed for each one separately.

With these bins selected, the original FFT transform, $\boldsymbol{X}_f$, of size N x K (with no zero-padding), is reduced to a matrix $\boldsymbol{X}_{f2}$ of size N × $N_{bins}$, where $N_{bins}$ is the number of selected frequency bins for a given spectral peak.

One $\boldsymbol{X}_{f2}$ matrix per frequency peak will be obtained. However, if iterative estimations over time are carried out, not all frequency peaks need to be considered. For example, those peaks which have not been detected in at least a given percentage of the preceding estimation iterations may be directly eliminated. In this point two frequency peak estimations will be considered equal if:

$$|f_1 - f_2| < k_f f_{res}$$

Where $k_f$ is a user-defined parameter, typically 1 or 2. This elimination stems from the logic that the desired signal will be in similar frequency bins in successive estimations, if these are carried out fast enough, whereas spurious peaks may appear anywhere.

$X_{f2}$ is the final output of the frequency stages, to be used in the Spatial Statistics Estimation and Processing **1608.** Firstly, the spatial correlation matrix is computed:

$$R_{xx} = \frac{1}{N_{bins}} X_{f2} X_{f2}^H$$

As in the frequency case, an eigen-decomposition is performed to the N x N spatial correlation matrix. The number of signals present is determined using the same statistical criteria, adapted to the spatial processing, and the corresponding eigenvectors are grouped in a likewise matrix $U_S$. If only one signal is detected the DoA

Estimation **1609** is directly carried out. In **1609,** the spatial spectrum to be optimised is obtained as follows:

$$\Psi(\theta, \varphi) = \frac{1}{trace\left\{\left[I - v(\theta, \varphi)\left(v^H(\theta, \varphi)v(\theta, \varphi)\right)^{-1}v^H(\theta, \varphi)\right] U_s W_{opt} U_s^H\right\}}$$

*I* is an NxN identity matrix, and $v(\theta,\varphi)$ is the SV obtained from the calibration process. The *trace*{ } operator sums the diagonal elements of the matrix argument. On the other hand:

$$W_{opt} = \gamma^2 (\gamma_S)^{-1}$$

$$\gamma = \gamma_S - \hat{\sigma}_n^2 I_D$$

Where $I_D$ *is* the DxD identity matrix, with D as the number of detected signals, and:

$$\gamma_S = \begin{pmatrix} \lambda_1 & 0 & 0 \\ 0 & \ddots & 0 \\ 0 & 0 & \lambda_D \end{pmatrix}$$

With $\lambda_1, ..., \lambda_D$ as the maximum eigenvalues of the eigendecomposition of $R_{xx}$, and:

$$\hat{\sigma}_n^2 = \frac{1}{N - D} \sum_{i=D+1}^{N} \lambda_i$$

$\Psi(\theta,\varphi)$ is the spectrum obtained from the Weighted Subspace Fitting (WSF) algorithm, which is a weighted version of the MUSIC algorithm. Other coordinates, besides $\theta, \varphi,$ can be used. The desired DoA $\theta_0,\varphi,$ will be:

$$\theta_0, \varphi_0 = \underset{\theta,\varphi}{\mathrm{argmax}}[\Psi(\theta, \varphi)]$$

As in the frequency case, a non-linear optimisation procedure can be used. One recommended solution is the Newton method, including penalty terms which limit the angular optimisation window to the a priori uncertainty one.

When more than one signal is present special precautions must be taken. Here the case of two signals will be treated, although this can be generalised up to N-1 signals.

In this case the Steering Vectors corresponding to each signal must be obtained from matrix $U_S$. This is carried out, as already mentioned, based on Procrustes' Problem. The matrix *A* is obtained as an output, related to $U_S$ as follows:

$$A = QU_S$$

Where $\boldsymbol{Q}$ is a unitary rotation matrix. The first column of $\boldsymbol{A}$, $\boldsymbol{A}_1$, is the Steering Vector of the first signal and the second column, $\boldsymbol{A}_2$, that of the second signal. Three different WSF spectrums are computed:

$$\Psi_1(\theta,\varphi) = \frac{1}{trace\left\{\left[\boldsymbol{I} - \boldsymbol{v}(\theta,\varphi)\big(\boldsymbol{v}^H(\theta,\varphi)\boldsymbol{v}(\theta,\varphi)\big)^{-1}\boldsymbol{v}^H(\theta,\varphi)\right]\boldsymbol{A}_1\boldsymbol{W}_{opt1}\boldsymbol{A}_1^H\right\}}$$

$$\Psi_2(\theta,\varphi) = \frac{1}{trace\left\{\left[\boldsymbol{I} - \boldsymbol{v}(\theta,\varphi)\big(\boldsymbol{v}^H(\theta,\varphi)\boldsymbol{v}(\theta,\varphi)\big)^{-1}\boldsymbol{v}^H(\theta,\varphi)\right]\boldsymbol{A}_2\boldsymbol{W}_{opt2}\boldsymbol{A}_2^H\right\}}$$

$$\Psi_3(\theta,\varphi) = \frac{1}{trace\left\{\left[\boldsymbol{I} - \boldsymbol{v}(\theta,\varphi)\big(\boldsymbol{v}^H(\theta,\varphi)\boldsymbol{v}(\theta,\varphi)\big)^{-1}\boldsymbol{v}^H(\theta,\varphi)\right]\boldsymbol{A}\boldsymbol{W}_{opt3}\boldsymbol{A}^H\right\}}$$

Each $\boldsymbol{W}_{opt}$ is computed taking into consideration the modifications in the $\boldsymbol{U}_s$ matrix for the corresponding spectrum. One maximum is selected from each $\Psi_1(\theta,\varphi)$ and $\Psi_2(\theta,\varphi)$ spectrums, and two from $\Psi_3(\theta,\varphi)$.

The four maxima will be given to the Signal Discriminator **504** so that the desired signal can be separated from the undesired ones. The same discrimination is applied if more than one frequency peak has been detected.

The exemplary configuration **1600** is not unique, and some of the stages can be eliminated. One obvious modification is not to take into account the frequency processing ones. In this case, after the beginning phase **1601** would come the Size of Samples Block Estimation **1604** and the Spatial Statistics Estimation and Processing **1608**. The spatial correlation matrix is computed in this case using directly the digital signal samples **x,** organised as an NxK complex matrix:

$$\boldsymbol{R}_{xx} = \frac{1}{K}\boldsymbol{x}\boldsymbol{x}^H$$

## Claims

1.  Method for locating an air or spaceborne vehicle (101) comprising:

    - receiving a signal (102) of a given frequency emitted from the vehicle (101), with an array of auxiliary antennae (103), wherein each auxiliary antenna (103) comprises at least one radiating element (1001);
    - analogue conditioning of the received signal via a plurality of receiving chains (104), each receiving chain (104) associated with an antenna (103) of the array;
    - converting the conditioned signal to a digital signal via plurality of synchronised ADCs (301), each ADC (301) associated with an antenna (103);
    - stamping an absolute time reference in the digital signal samples;
    - estimating the frequency drift rate associated with the Doppler effect taking into account the absolute time reference of the digital signal samples and the partial information of the trajectory of the vehicle (101), wherein estimating the frequency drift rate further comprises estimating the frequency shift rate during an interval of time;
    - compensating the Doppler effect of a plurality of digital signal samples according to the estimated frequency drift rate, wherein compensating the Doppler effect further comprises multiplying by a factor which is a function of the frequency shift rate;
    - estimating the SNR for a receiving chain;
    - selecting a number of digital samples of the receiving chains in dependence upon the SNR and the non-compensated frequency shift rate;
    - analysing the frequency power spectrum density for identifying at least one spectral peak and a plurality of frequency bins around the at least one spectral peak having a power level greater than a threshold;
    - computing the spatial correlation of the plurality of frequency bins around the at least one spectral peak;
    - statistically calculating a DoA in dependence upon the computed spatial correlation; and
    - orientating a main antenna towards the vehicle according to the calculated DoA.

2. Method according to claim 1, wherein it comprises:

- defining coordinate system of the auxiliary array of antennae according to the coordinate system of main antenna;
- obtaining a parametric calibration model;
- modifying the parametric calibration model according with a statistical calibration.

3. Method according to claims 1 or 2, wherein, for a plurality of DoAs over time, it further comprises a step of:

- filtering the DoA for excluding outliers by applying at least one of the following filters:

a Kalman Filter,
an Unscented Kalman Filter,
an Extended Kalman Filter,
a Particle Filter.

4. Method according to any of claims 1 to 3, wherein the auxiliary antenna (103) comprises a plurality of radiating elements (1001) and the method comprises a step of adapting the gain according to the distance and angular speed of the vehicle by selecting the radiating elements (1001) to be activated.

5. Method according to claims 1 or 2, wherein, in case of having a plurality of identified peaks corresponding to a plurality of DoAs or having a plurality of calculated DoAs for a single point in time, it further comprises the step of selecting a DoA over time in dependence upon a comparison of each combination of the plurality of DoAs over time with the partial information of the trajectory.

6. Method according to any of claims 1 to 5, wherein it further comprises calculating an additional DoA associated with an additional signal of a different frequency and/or polarisation emitted from the vehicle (101) and selecting the DoA or the additional DoA in dependence upon a comparison with the partial information of the trajectory.

7. System for locating an air or spaceborne vehicle (101) comprising:

- an array of auxiliary antennae (103) configured to receive a signal (102) of a given frequency emitted from the vehicle (101), wherein each auxiliary antenna (103) comprises at least one radiating element (1001);
- a plurality of receiving chains (104) configured to perform an analogue conditioning the received signal, each receiving chain (104) associated with an antenna (103) of the array;
- a plurality of synchronised ADCs (301) configured to convert the conditioned signal to a digital signal, each ADC (301) associated with an antenna (103);
- a multichannel digital processor (105) configured to:

- stamp an absolute time reference in the digital signal samples;
- estimate the frequency drift rate associated with the Doppler effect taking into account the absolute time reference of the digital signal samples and the partial information of the trajectory of the vehicle (101), wherein estimating the frequency drift rate further comprises estimating the frequency shift rate during an interval of time;
- compensate the Doppler effect of a plurality of digital signal samples according to the estimated frequency drift rate, wherein compensating the Doppler effect further comprises multiplying by a factor which is a function of the frequency shift rate;
- estimate the SNR for a receiving chain;
- select a number of digital samples of the receiving chains in dependence upon the SNR and the non-compensated frequency shift rate;
- analyse the frequency power spectrum density for identifying at least one spectral peak and a plurality of frequency bins around the at least one spectral peak having a power level greater than a threshold;
- compute the spatial correlation of the plurality of frequency bins around the at least one spectral peak in order to calculate the corresponding DoA;
- statistically calculate a DoA in dependence upon the computed spatial correlation; and
- orientate a main antenna towards the vehicle (101) according to the calculated DoA.

8. System according to claim 7, wherein multichannel digital processor (105) is configured to:

- define coordinate system of the auxiliary array of antennae according to the coordinate system of main antenna;
- obtain a parametric calibration model;
- modify the parametric calibration model according with a statistical calibration.

**9.** System according to claims 7 or 8, wherein, for a plurality of DoAs over time, it further comprises means of filtering the DoA for excluding outliers by applying at least one of the following filters:

- a Kalman Filter,
- an Unscented Kalman Filter,
- an Extended Kalman Filter,
- a Particle Filter.

**10.** System according to any of claims 7 to 9, wherein the auxiliary antenna (103) comprises a plurality of radiating elements (1001) and the multichannel digital processor (105) is configured to adapt the gain according to the distance and angular speed of the vehicle (101) by selecting the radiating elements (1001) to be activated.

**11.** System according to any of claims 7 to 9, wherein, in case of having a plurality of identified peaks corresponding to a plurality of DoAs or having a plurality of calculated DoAs for a single point in time, the multichannel digital processor (105) is configured to select a DoA over time in dependence upon a comparison of each combination of the plurality of DoAs over time with the partial information of the trajectory.

**Patentansprüche**

**1.** Verfahren zum Orten eines Luft- oder Raumfahrzeugs (101) umfassend:

- das Empfangen eines vom Fahrzeug (101) ausgesendeten Signals (102) einer gegebenen Frequenz, mit einer Anordnung von Hilfsantennen (103), wobei jede Hilfsantenne (103) mindestens ein Strahlerelement (1001) umfasst;
- das Analog-Konditionieren des empfangenen Signals mittels einer Vielzahl von Empfangsketten (104), wobei jede Empfangskette (104) mit einer Antenne (103) der Anordnung assoziiert ist;
- das Umsetzen des konditionierten Signals in ein digitales Signal mittels einer Vielzahl von synchronisierten ADU (301), wobei jeder ADU (301) mit einer Antenne (103) assoziiert ist;
- das Stempeln einer absoluten Referenzzeit in den digitalen Signalproben;
- das Einschätzen der mit dem Dopplereffekt assoziierten Frequenzdriftrate unter Berücksichtigung der absoluten Referenzzeit der digitalen Signalproben und der Teilinformation der Bahn des Fahrzeugs (101), wobei das Einschätzen der Frequenzdriftrate zusätzlich das Einschätzen der Frequenzverschiebungsrate während eines Zeitintervalls umfasst;
- das Ausgleichen des Dopplereffekts einer Vielzahl von digitalen Signalproben gemäß der eingeschätzten Frequenzdriftrate, wobei das Ausgleichen des Dopplereffekts zusätzlich das Multiplizieren mit einem Faktor, welches eine Funktion der Frequenzverschiebungsrate ist, umfasst;
- das Einschätzen des SRV für eine Empfangskette;
- das Auswählen einer Anzahl von digitalen Proben der Empfangsketten abhängig von dem SRV und der nicht kompensierten Frequenzverschiebungsrate;
- das Analysieren der Leistungsspektraldichte der Frequenz zum Identifizieren mindestens eines spektralen Maximums und einer Vielzahl von Frequenz-Bins um das mindestens eine spektrale Maximum herum, aufweisend einen Leistungspegel, der grösser als einen Schwellenwert ist;
- das Errechnen der räumlichen Korrelation der Vielzahl von Frequenz-Bins um das mindestens eine spektrale Maximum herum;
- das statistische Berechnen einer DoA abhängig von der errechneten räumlichen Korrelation; und
- das Orientieren einer Hauptantenne in Richtung des Fahrzeugs gemäß der berechneten DoA.

**2.** Verfahren nach Anspruch 1, wobei es Folgendes umfasst:

- das Definieren eines Koordinatensystems der Hilfsanordnung von Antennen gemäß dem Koordinatensystem der Hauptantenne;
- das Erhalten eines parametrischen Kalibrierungsmodells;
- das Modifizieren des parametrischen Kalibrierungsmodells gemäß einer statistischen Kalibrierung.

3. Verfahren nach den Ansprüchen 1 oder 2, wobei, für eine Vielzahl von DoAs im Zeitablauf, es zusätzlich einen Schritt:

  - des Filtrieren der DoA zum Ausschließen von Ausreißer durch die Anwendung mindestens eines der folgenden Filter:

    eines Kalman-Filters,
    eines Unscented Kalman-Filters,
    eines Extended Kalman-Filters,
    eines Partikel-Filters,

  umfasst.

4. Verfahren nach einem der Ansprüche 1 bis 3, wobei die Hilfsantenne (103) eine Vielzahl von Strahlerelementen (1001) umfasst und das Verfahren einen Schritt des Anpassen des Gewinns gemäß dem Abstand und der Winkelgeschwindigkeit des Fahrzeugs durch das Auswählen der zu aktivierenden Strahlerelemente (1001), umfasst.

5. Verfahren nach den Ansprüchen 1 oder 2, wobei, falls es eine Vielzahl von identifizierten Maxima entsprechend einer Vielzahl von DoAs gibt oder es eine Vielzahl von berechneten DoAs für einen einzigen Zeitpunkt gibt, es zusätzlich den Schritt des Auswählens einer DoA im Zeitablauf abhängig von einem Vergleich jeder Kombination der Vielzahl von DoAs im Zeitablauf mit der Teilinformation der Bahn, umfasst.

6. Verfahren nach einem der Ansprüche 1 bis 5, wobei es zusätzlich das Berechnen einer weiteren DoA, assoziiert mit einem weiteren, vom Fahrzeug (101) ausgesendeten, Signal einer unterschiedlichen Frequenz und/oder Polarisation und das Auswählen der DoA oder der weiteren DoA abhängig von einem Vergleich mit der Teilinformation der Bahn, umfasst.

7. System zum Orten eines Luft- oder Raumfahrzeugs (101) umfassend:

  - eine Anordnung von Hilfsantennen (103), welche dazu ausgebildet sind, ein vom Fahrzeug (101) ausgesendeten Signal (102) einer gegebenen Frequenz zu empfangen, wobei jede Hilfsantenne (103) mindestens ein Strahlerelement (1001) umfasst;
  - eine Vielzahl von Empfangsketten (104), welche dazu ausgebildet sind, eine Analog-Konditionierung des empfangenen Signals durchzuführen, wobei jede Empfangskette (104) mit einer Antenne (103) der Anordnung assoziiert ist;
  - eine Vielzahl von synchronisierten ADU (301), welche dazu ausgebildet sind, das konditionierte Signal in ein digitales Signal umzusetzen, wobei jeder ADU (301) mit einer Antenne (103) assoziiert ist;
  - einen digitalen Mehrkanal-Prozessor (105), welcher dazu ausgebildet ist:

    - eine absolute Referenzzeit in den digitalen Signalproben zu stempeln;
    - die mit dem Dopplereffekt assoziierten Frequenzdriftrate unter Berücksichtigung der absoluten Referenzzeit der digitalen Signalproben und der Teilinformation der Bahn des Fahrzeugs (101) einzuschätzen, wobei das Einschätzen der Frequenzdriftrate zusätzlich das Einschätzen der Frequenzverschiebungsrate während eines Zeitintervalls umfasst;
    - den Dopplereffekt einer Vielzahl von digital Signalproben gemäß der eingeschätzten Frequenzdriftrate auszugleichen, wobei das Ausgleichen des Dopplereffekts zusätzlich das Multiplizieren mit einem Faktor, welches eine Funktion der Frequenzverschiebungsrate ist, umfasst;
    - das SRV für eine Empfangskette einzuschätzen;
    - eine Anzahl von digitalen Proben der Empfangsketten abhängig von dem SRV und der nicht kompensierten Frequenzverschiebungsrate auszuwählen;
    - die Leistungsspektraldichte der Frequenz zum Identifizieren mindestens eines spektralen Maximums und einer Vielzahl von Frequenz-Bins um das mindestens eine spektrale Maximum herum, aufweisend einen Leistungspegel, der grösser als einen Schwellenwert ist, zu analysieren;
    - die räumliche Korrelation der Vielzahl von Frequenz-Bins um das mindestens eine spektrale Maximum herum zu errechnen, im die entsprechende DoA zu berechnen;
    - eine DoA abhängig von der errechneten räumlichen Korrelation statistisch zu berechnen; und
    - eine Hauptantenne in Richtung des Fahrzeugs (101) gemäß der berechneten DoA zu orientieren.

8. System nach Anspruch 7, wobei der digitale Mehrkanal-Prozessor (105) dazu ausgebildet ist:

- ein Koordinatensystem der Hilfsanordnung von Antennen gemäß dem Koordinatensystem der Hauptantenne zu definieren;
- ein parametrisches Kalibrierungsmodell zu erhalten;
- das parametrische Kalibrierungsmodell gemäß einer statistischen Kalibrierung zu modifizieren.

9.  System nach den Ansprüchen 7 oder 8, wobei, für eine Vielzahl von DoAs im Zeitablauf, es zusätzlich Mittel zum Filtrieren der DoA zum Ausschließen von Ausreißer durch die Anwendung mindestens eines der folgenden Filter:

- eines Kalman-Filters,
- eines Unscented Kalman-Filters,
- eines Extended Kalman-Filters,
- eines Partikel-Filters,

umfasst.

10. System nach einem der Ansprüche 7 bis 9, wobei die Hilfsantenne (103) eine Vielzahl von Strahlerelementen (1001) umfasst und der digitale Mehrkanal-Prozessor (105) dazu ausgebildet ist, den Gewinn gemäß dem Abstand und der Winkelgeschwindigkeit des Fahrzeugs (101) durch das Auswählen der zu aktivierenden Strahlerelemente (1001) anzupassen.

11. System nach einem der Ansprüche 7 bis 9, wobei, falls es eine Vielzahl von identifizierten Maxima entsprechend einer Vielzahl von DoAs gibt oder es eine Vielzahl von berechneten DoAs für einen einzigen Zeitpunkt gibt, der digitale Mehrkanal-Prozessor (105) dazu ausgebildet ist, eine DoA im Zeitablauf abhängig von einem Vergleich jeder Kombination der Vielzahl von DoAs im Zeitablauf mit der Teilinformation der Bahn, auszuwählen.

## Revendications

1.  Procédé de localisation d'un véhicule aérien ou spatial (101) comprenant :

- réception d'un signal (102) d'une fréquence donnée émis à partir du véhicule (101), avec un réseau d'antennes auxiliaires (103), où chaque antenne auxiliaire (103) comprend au moins un élément rayonnant (1001) ;
- conditionnement analogique du signal reçu par le biais d'une pluralité de chaînes de réception (104), chaque chaîne de réception (104) étant associée à une antenne (103) du réseau ;
- conversion du signal conditionné en un signal numérique par le biais d'une pluralité de CAN (301) synchronisés, chaque CAN (301) étant associé à une antenne (103) ;
- estampage d'une référence de temps absolu dans les échantillons de signaux numériques ;
- estimation de la vitesse de dérive de fréquence associée à l'effet Doppler prenant en compte la référence de temps absolu des échantillons de signaux numériques et l'information partielle de la trajectoire du véhicule (101), où l'estimation de la vitesse de dérive de fréquence comprend en outre une estimation de la vitesse de déplacement de fréquence durant un intervalle de temps ;
- compensation de l'effet Doppler d'une pluralité d'échantillons de signaux numériques selon la vitesse de dérive de fréquence estimée, où la compensation de l'effet Doppler comprend en outre une multiplication par un facteur qui est une fonction de la vitesse de déplacement de fréquence ;
- estimation du SNR pour une chaîne de réception ;
- choix d'un nombre d'échantillons numériques des chaînes de réception en fonction du SNR et de la vitesse de déplacement de fréquence non-compensée ;
- analyse de la densité de spectre de puissance de fréquence pour identifier au moins un pic spectral et une pluralité de segments de fréquence autour dudit au moins un pic spectral ayant un niveau de puissance supérieur à un seuil ;
- calcul de la corrélation spatiale de la pluralité de segments de fréquence autour dudit au moins un pic spectral ;
- calcul de manière statistique d'une DoA en fonction de la corrélation spatiale calculée ; et
- orientation d'une antenne principale en direction du véhicule selon la DoA calculée.

2.  Procédé selon la revendication 1, où il comprend :

- définition d'un système de coordonnées du réseau auxiliaire d'antennes selon le système de coordonnées de l'antenne principale ;

- obtention d'un modèle de calibration paramétrique ;
- modification du modèle de calibration paramétrique selon une calibration statistique.

3. Procédé selon les revendications 1 ou 2, où, pour une pluralité de DoA dans le temps, il comprend également une étape de :

- filtrage de la DoA pour exclure les valeurs aberrantes en appliquant au moins un des filtres suivants :

un filtre de Kalman,
un filtre de Kalman inodore,
un filtre de Kalman étendu,
un filtre à particules.

4. Procédé selon l'une quelconque des revendications 1 à 3, où l'antenne auxiliaire (103) comprend une pluralité d'éléments rayonnants (1001) et le procédé comprend une étape d'adaptation du gain selon la distance et la vitesse angulaire du véhicule en choisissant les éléments rayonnants (1001) à activer.

5. Procédé selon les revendications 1 ou 2, où, dans le cas d'une pluralité de pics identifiés correspondant à une pluralité de DoA ou d'une pluralité de DoA calculées pour un seul moment dans le temps, il comprend en outre l'étape de choix d'une DoA dans le temps en fonction d'une comparaison de chaque combinaison de la pluralité de DoA dans le temps avec l'information partielle de la trajectoire.

6. Procédé selon l'une quelconque des revendications 1 à 5, où il comprend en outre le calcul d'une DoA supplémentaire associée à un signal supplémentaire d'une fréquence et/ou polarisation différente émis à partir du véhicule (101) et le choix de la DoA ou de la DoA supplémentaire en fonction d'une comparaison avec l'information partielle de la trajectoire.

7. Système de localisation d'un véhicule aérien ou spatial (101) comprenant :

- un réseau d'antennes auxiliaires (103) configurées pour recevoir un signal (102) d'une fréquence donnée émis à partir du véhicule (101), où chaque antenne auxiliaire (103) comprend au moins un élément rayonnant (1001) ;
- une pluralité de chaînes de réception (104) configurées pour réaliser un conditionnement analogique du signal reçu, chaque chaîne de réception (104) étant associée à une antenne (103) du réseau ;
- une pluralité de CAN (301) synchronisés configurés pour convertir le signal conditionné en un signal numérique, chaque CAN (301) étant associé à une antenne (103) ;
- un processeur numérique multivoie (105) configuré pour :

- estamper une référence de temps absolu dans les échantillons de signaux numériques ;
- estimer la vitesse de dérive de fréquence associée à l'effet Doppler en prenant en compte la référence de temps absolu des échantillons de signaux numériques et l'information partielle de la trajectoire du véhicule (101), où l'estimation de la vitesse de dérive de fréquence comprend en outre l'estimation de la vitesse de déplacement de fréquence durant un intervalle de temps ;
- compenser l'effet Doppler d'une pluralité d'échantillons de signaux numériques selon la vitesse de dérive de fréquence estimée, où compenser l'effet Doppler comprend en outre la multiplication par un facteur qui est une fonction de la vitesse de déplacement de fréquence ;
- estimer le SNR pour une chaîne de réception ;
- choisir un nombre d'échantillons numériques des chaînes de réception en fonction du SNR et de la vitesse de déplacement de fréquence non-compensée ;
- analyser la densité de spectre de puissance de fréquence pour identifier au moins un pic spectral et une pluralité de segments de fréquence autour dudit au moins un pic spectral ayant un niveau de puissance supérieur à un seuil ;
- calculer la corrélation spatiale de la pluralité de segments de fréquence autour dudit au moins un pic spectral afin de calculer la DoA correspondante ;
- calculer statistiquement une DoA en fonction de la corrélation spatiale calculée ; et
- orienter une antenne principale en direction du véhicule (101) selon la DoA calculée.

8. Système selon la revendication 7, où le processeur numérique multivoie (105) est configuré pour :

- définir un système de coordonnées du réseau auxiliaire d'antennes selon le système de coordonnées de l'antenne principale ;
- obtenir un modèle de calibration paramétrique ;
- modifier le modèle de calibration paramétrique selon une calibration statistique.

9. Système selon les revendications 7 ou 8, où, pour une pluralité de DoA dans le temps, il comprend en outre des moyens de filtrage de la DoA pour exclure les valeurs aberrantes en appliquant au moins un des filtres suivants :

   - un filtre de Kalman,
   - un filtre de Kalman inodore,
   - un filtre de Kalman étendu,
   - un filtre à particules.

10. Système selon l'une quelconque des revendications 7 à 9, où l'antenne auxiliaire (103) comprend une pluralité d'éléments rayonnants (1001) et le processeur numérique multivoie (105) est configuré pour adapter le gain selon la distance et la vitesse angulaire du véhicule (101) en choisissant les éléments rayonnants (1001) à activer.

11. Système selon l'une quelconque des revendications 7 à 9, où, dans le cas d'une pluralité de pics identifiés correspondant à une pluralité de DoA ou d'une pluralité de DoA calculées pour un seul moment dans le temps, le processeur numérique multivoie (105) est configuré pour choisir une DoA dans le temps en fonction d'une comparaison de chaque combinaison de la pluralité de DoA dans le temps avec l'information partielle de la trajectoire.

FIG. 1

FIG. 2

Signal from
RC 104

Signal from
RC 104

Signal from
RC 104

120

120

120

Signal from F&T
106

118a

ADC
301

ADC
301

ADC
301

118a

118a

Data from
MCIM 110

121a

Digital Conditioner
302

Data from/to
CDGC 108

109

Statistical Processor
303

Data from
MCIM 110

121b

Signal from F&T
106

118b

Time Stamping
304

Signal from
MCIM 110

121c

Signal Tracker and Discriminator
305

Multichannel Digital
Processor 105

121d

DoA and Time
Stamp to MCIM 110

FIG. 3

FIG. 4

Signal from Time
Stamping 304

Data from
MCIM 110

Coordinate Transformation
501

121c1

DoA Filtering
502

121c2

Signal Tracker
and
Discriminator
305

DoA Prediction
503

121c3

Signal Discriminator
504

121c4

Coordinate Transformation
505

121c5

121d

DoA and Time
Stamp to MCIM 110

**FIG. 5**

Absolute Time
Reference 112

115

Signal to MDP
105

118b | Absolute Time Reference Processor 601 | 603 | Trigger and Clock Generator 602

Signal to MDP
105

118a

119a

Signal
from
MCIM 110

Frequency Reference Generator 604

107

119b

Signal to RC
104

Signal
from/to
MCIM 110

Frequency &
Time 106

FIG. 6

FIG. 7

Data from/to
End User
113a

Data from/to
Miscellaneous
External Sources
113b

Data from
Main Antenna
Interface
114a

116a

116b

117a

Graphical User
Interface
801

803

External Data Processor
and Distributor
802

811

805

806

813

Data Plotter
809

810

MCIM Core
804

Data Storage 812

808

111

Signal from/to
RC 104

Signal from
MDP 105

121d

DoA Distributor
807

119

Signal from/to
F&T 106

117b

121a, 121b, 121c

Signal from/to
MDP 105

Monitoring, Control and
Interface Manager 110

122

Signal from/to
CDGC 108

1003a, 1003b

Signal from/to
Antenna 103

Data to Main
Antenna
Interface
114b

FIG. 8

Trajectory Data File
113b

Main Antenna
Interface 114a

116b

117a

Trajectory
Propagator
901

Steering and Time
Stamp Transformer
903

902

904

Data Distributor
905

External Data Processor
and Distributor 802

803, 806

FIG. 9

FIG. 10

```
      ┌─────────────────┐
      │     Begin        │
      │     1101         │
      └────────┬─────────┘
               │
               ▼
      ┌─────────────────┐
      │  GUI Parameters  │
      │    Definition    │
      │      1102        │
      └────────┬─────────┘
               │
               ▼
      ┌─────────────────┐
      │   Statistical    │
      │   Calibration    │
      │      1103        │
      └────────┬─────────┘
               │
               ▼
      ┌─────────────────┐
      │ Signal Acquisition│
      │      1104        │
      └────────┬─────────┘
               │
               ▼
      ┌─────────────────┐
      │  DoA Calculation │
      │      1105        │
      └────────┬─────────┘
               │
               ▼
      ┌─────────────────┐
      │ Results Analysis │
      │      1106        │
      └────────┬─────────┘
               │
               ▼           1100
      ┌─────────────────┐
      │     Return       │
      │     1107         │
      └─────────────────┘
```

# FIG. 11

FIG. 12

FIG. 13

```
                        ┌──────────┐
                        │  Begin   │
                        │  1401    │
                        └────┬─────┘
                             │
                             ▼
                    ┌─────────────────┐
                    │    Anechoic     │
                    │ Chamber Antenna │
                    │   Calibration   │
                    │      1402       │
                    └────┬───────┬────┘
              1405       │       │      1406
            ┌────────────┘       └───────────┐
            ▼                                 ▼
    ┌────────────────┐              ┌────────────────┐
    │  Geometrical   │              │   S-parameter  │
    │  Calibration   │              │   Calibration  │
    │     1403       │              │      1404      │
    └───────┬────────┘              └───────┬────────┘
            │                               │
            │                               ▼
            │                       ┌────────────────┐
            │                       │   Test Signal  │
            │                       │    Injection   │
            │                       │   Calibration  │
            │                       │      1407      │
            │                       └───────┬────────┘
            │                               │
            └──────────────┐   ┌────────────┘
                           ▼   ▼
                    ┌────────────────────┐
                    │ A Priori Parametric│
                    │  Model Generation  │
                    │        1408        │
                    └─────────┬──────────┘
                              │
                              ▼
                    ┌────────────────┐
                    │   Statistical  │
                    │   Calibration  │
                    │      1409      │
                    └───────┬────────┘
                            │
                            ▼
                    ┌──────────┐        1400
                    │  Return  │
                    │   1410   │
                    └──────────┘
```

FIG. 14

FIG. 15

```
                    ┌─────────────┐
                    │   Begin     │
        1600        │   1601      │
                    └──────┬──────┘
                           │
                           ▼
        ┌──────────────────────────────────────┐
        │  Doppler Frequency Rate Estimation   │
        │                1602                  │
        └──────────────────┬───────────────────┘
                           │
                           ▼
          ┌─────────────────────────────────────┐
          │   Doppler Frequency Compensation    │
          │               1603                  │
          └─────────────────┬───────────────────┘
                            │
                            ▼
           ┌────────────────────────────────────┐
           │   Size of Samples Block Estimation │
           │              1604                  │
           └────────────────┬───────────────────┘
                            │
                            ▼
              ┌─────────────────────────────┐
              │     Samples Averaging       │
              │           1605              │
              └──────────────┬──────────────┘
                             │
                             ▼
              ┌─────────────────────────────┐
              │    Frequency Processing     │
              │           1606              │
              └──────────────┬──────────────┘
                             │
                             ▼
              ┌─────────────────────────────┐
              │     Frequency Maxima        │
              │       Selection             │
              │          1607               │
              └──────────────┬──────────────┘
                             │
                             ▼
    ┌──────────────────────────────────────────────┐
    │  Spatial Statistics Estimation and Processing │
    │                   1608                        │
    └──────────────────┬────────────────────────────┘
                       │
                       ▼
              ┌─────────────────────────────┐
              │      DoA Estimation         │
              │          1609               │
              └──────────────┬──────────────┘
                             │
                             ▼
                    ┌─────────────┐
                    │   Return    │
                    │    1610     │
                    └─────────────┘
```

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6697633 B

- JP 2012044596 A

### Non-patent literature cited in the description

- Optimum Array Processing. Part IV of Detection. **H. L. VAN TREES.** Estimation and Modulation Theory. Wiley, 2002
- **L. C. GODARA.** Smart Antennas. CRC Press, 2004
- **R. O. SCHMIDT.** Multiple emitter location and signal parameter estimation. *IEEE Trans. Antenna Propag.,* March 1986, vol. AP-34, 276-280
- **R. ROY.** ESPRIT: Estimation of Signal Parameters via Rotational Invariance Techniques. *Ph. D. Dissertation,* 1987
- **B. NADLER.** Nonparametric Detection of Signals by Information Theoretic Criteria: Performance Analysis and an Improved Estimator. *IEEE Trans. Signal Processing,* May 2010, vol. 58 (5

- **A. J. WEISS ; B. FRIEDLANDER.** Algorithm for Steering Vector Estimation Using Second Order Moments. *Proceedings on IEEE,* October 1995
- **D. A. WHEELER ; P. R. ATKINS.** Estimation of Source Bearings at a Randomly Deformed Array by Signal Space Transformations. *IEEE,* April 1991
- **P. J. CHUNG ; S. WAN.** Array Self-Calibration Using SAGE Algorithm. *IEEE,* 05 July 2008
- **A. MANIKAS ; N. FISTAS.** Modelling and Estimation of Mutual Coupling between Array Elements. *IEEE,* 1994